Europäisches Patentamt

European Patent Office

Office européen des brevets

(19)

(11) **EP 1 007 202 B1**

(12) **FASCICULE DE BREVET EUROPEEN**

(45) Date de publication et mention
de la délivrance du brevet:
**04.07.2001 Bulletin 2001/27**

(21) Numéro de dépôt: **98942743.0**

(22) Date de dépôt: **14.08.1998**

(51) Int Cl.⁷: **B01J 20/32**, D21H 21/16,
D06M 13/188, C03C 17/30

(86) Numéro de dépôt international:
**PCT/FR98/01808**

(87) Numéro de publication internationale:
**WO 99/08784 (25.02.1999 Gazette 1999/08)**

(54) **PROCEDE DE TRAITEMENT D'UN MATERIAU SOLIDE POUR LE RENDRE HYDROPHOBE, MATERIAU OBTENU ET APPLICATIONS**

**VERFAHREN ZUR HYDROPHOBIERENDEN BEHANDLUNG EINES FESTEN MATERIALES, HERGESTELLTES MATERIAL UND VERWENDUNGEN**

**METHOD FOR TREATING A SOLID MATERIAL TO MAKE IT HYDROPHOBIC, MATERIAL OBTAINED AND USES**

(84) Etats contractants désignés:
**AT BE CH CY DE DK ES FI FR GB GR IE IT LI LU MC NL PT SE**

(30) Priorité: **14.08.1997 FR 9710364**

(43) Date de publication de la demande:
**14.06.2000 Bulletin 2000/24**

(73) Titulaire: **Samain, Daniel**
**31400 Toulouse (FR)**

(72) Inventeur: **Samain, Daniel**
**31400 Toulouse (FR)**

(74) Mandataire:
**Cabinet BARRE LAFORGUE & associés**
**95, rue des Amidonniers**
**31000 Toulouse (FR)**

(56) Documents cités:
**GB-A- 588 762        US-A- 2 130 150**
**US-A- 2 824 778        US-A- 4 339 479**
**US-A- 5 071 709**

EP 1 007 202 B1

Printed by Jouve, 75001 PARIS (FR)

**EP 1 007 202 B1**

## Description

L'invention concerne un procédé de traitement d'un matériau solide dont la structure chimique définit des fonctions hydrophiles réactives accessibles aux gaz. en vue du greffage covalent de groupements hydrophobes permettant de rendre le matériau hydrophobe et/ou lipophile.

On sait depuis longtemps (FR-707688 ; "Breathable, Permanent Water-Repellent Treatment of Cotton", Rudolph D. DEANIN et al., Textile Research Journal, Vol. 40, 11, Nov. 1970, pp 970), qu'il est possible de traiter des matières textiles cellulosiques par estérification en milieu liquide et à l'abri de l'air à l'aide de dérivés d'acides gras supérieurs pour rendre ces matières hydrophobes. Pour ce faire, on place un tissu dans au moins un bain d'une solution liquide comprenant des réactifs d'estérification et un solvant apolaire neutre vis-à-vis de la matière textile, chauffé à une température comprise entre 80° et 120° C pendant quinze ou trente minutes, on lave le tissu et on le sèche. FR-707688 précise en outre qu'il est préférable d'effectuer l'estérification à l'abri de l'air ou de l'oxygène.

Ce traitement en milieu liquide hétérogène nécessite en pratique plusieurs bains, une durée d'au moins 15 min, un lavage et un séchage. Il est donc long. complexe et coûteux et est réservé à un usage de laboratoire, et ne peut pas être exploité dans des conditions de rentabilité satisfaisantes, à l'échelle industrielle et pour des matériaux de faible coût.

En outre, ce traitement en milieu liquide hétérogène ne peut être envisagé pour les matériaux fragiles tels que les non tissés, les agglomérés, le papier... et/ou sensibles aux solvants, tels que les acétates de cellulose.

De même, FR-693 803 décrit un procédé dans lequel on immerge la matière textile dans une solution ou une émulsion d'anhydride d'acide gras dans un solvant, on la presse, on la sèche par chauffage, puis on la soumet à une température supérieure à 35°C, de préférence entre 70° et 100° C pendant environ six heures.

Là encore, le procédé est extrêmement long et coûteux, et n'est pas applicable à d'autres matières que les textiles.

Dans tous les cas, avec ces procédés connus en phase liquide, si on utilise des chlorures d'acides gras comme réactifs, il est en pratique nécessaire de neutraliser l'acide chlorhydrique formé par adjonction d'une base pour éviter l'hydrolyse acide des fibres de cellulose conduisant à une dégradation totale de leurs caractéristiques mécaniques. Et si on utilise des anhydrides d'acides gras comme réactifs, la présence d'un catalyseur tel que la pyridine ou le diméthylformamide est nécessaire pour accélérer la réaction.

On a déjà pensé à essayer de rendre hydrophobe un matériau cellulosique par acylation à partir de vapeurs d'organohalogènosilanes, tels que les méthyl chlorosilanes ayant un poids moléculaire suffisamment faible pour pouvoir être vaporisés à des températures compatibles avec le matériau cellulosique à traiter (US - 2306 222,US - 2824778, US - 4339479 ; US - 4007050...). Pour former et contenir les vapeurs et les mettre au contact du matériau à traiter une enceinte de confinement des vapeurs doit être prévue. En outre le caractère hydrophobe procuré est faible et peu résistant, et un traitement de neutralisation subséquent doit être prévu.

En particulier, US-2 824 778 décrit un procédé dans lequel on fait passer un tissu dans un conduit en U refermé sur lui-même dans lequel un mélange gazeux de vapeur saturante de silane de bas poids moléculaire et d'un gaz inerte est entretenu par un injecteur de silane sous forme atomisée dans le conduit. Ce procédé en phase vapeur nécessite un circuit fermé à recirculation pour empêcher les vapeurs de silanes de s'échapper compte tenu de leur faible température d'ébullition. Il ne permet pas le traitement de matériaux non poreux. Il est en outre nécessaire de prévoir ensuite un traitement pour un bain de neutralisation.

US-4107426 décrit aussi un procédé de traitement de matériau cellulosique par mise en contact avec des vapeurs d'un chlorure d'acide aliphatique formées par chauffage de chlorure d'acide aliphatique liquide dans une enceinte de confinement de façon à créer dans cette enceinte maintenue à la pression atmosphérique, une pression partielle de vapeurs comprise entre 10 mm Hg (1333 Pa) et 20 mm Hg (2666 Pa), avec un gaz de dilution, tel que de l'azote qui est introduit dans l'enceinte. Le mélange gazeux dans l'enceinte est extrait via un condenseur qui permet l'extraction du gaz HCl formé et la récupération des chlorures d'acides s'échappant de l'enceinte.

Ce procédé est complexe à mettre en oeuvre puisqu'il nécessite de mettre le matériau solide dans ou au contact d'une enceinte de confinement étanche. Il n'est vraiment efficace qu'avec des réactifs de greffage comprenant de 8 à 14 carbones ayant une tension de vapeur suffisante pour des températures inférieures à 150°C, température de début de décomposition de la cellulose, pour pouvoir former une pression de vapeur suffisante dans l'enceinte. Ainsi une température de 150 ° C est préconisée avec le chlorure d'acide laurique, et 180 °C avec le chlorure d'acide myristique. Aucun exemple précis n'est donné pour le greffage de groupements hydrophobes ayant plus de 14 carbones.

En outre, la réaction de greffage ne présente pas en pratique une cinétique et un rendement satisfaisants.

Ainsi, bien que le principe de rendre hydrophobe un matériau solide par estérification à l'aide de dérivés d'acides gras est connu de longue date, et malgré les différentes recherches effectuées sur ce sujet depuis 1930, aucune exploitation pratique à l'échelle industrielle n'a encore été possible de ce principe.

Il est à noter qu'avec toutes les solutions proposées jusqu'à maintenant pour rendre les matériaux solides hydrophobes par greffage covalent de groupements hydrophobes, le rendement et la cinétique de la réaction de greffage croissent avec la température, avec la concentration en réactif de greffage au contact du matériau solide (concentration dans le bain en phase liquide ou pression de vapeurs en phase vapeur), et décroissent avec le nombre de carbones du réactif de greffage, c'est-à-dire avec son caractère hydrophobe.

L'invention vise donc à pallier ces inconvénients et à proposer un procédé de traitement extrêmement simple, rapide et peu coûteux, exploitable en pratique à l'échelle industrielle, et permettant de rendre un matériau solide hydrophobe et/ou lipophile.

L'invention vise en particulier à proposer un procédé de traitement dont le rendement et la cinétique sont suffisamment améliorés pour être compatibles avec une rentabilité à l'échelle industrielle. L'invention vise également à proposer un procédé avec lequel la consommation en réactif de greffage est réduite et qui ne crée pas d'effluents ou résidus toxiques en quantité sensible.

L'invention vise en outre plus particulièrement à proposer un tel procédé qui ne nécessite pas l'emploi de catalyseurs, ni de composés de piégeage ou de neutralisation des acides formés, ni de lavage subséquent.

L'invention vise également à proposer un procédé de traitement applicable à de nombreux matériaux solides et, de façon générale, à tout matériau solide présentant des fonctions hydrophiles réactives à sa surface spécifique accessible aux gaz. L'invention vise ainsi à permette le traitement de matériaux cellulosiques mais également d'autres matériaux, notamment des matériaux à structure minérale tels que le verre. L'invention vise en particulier à permettre le traitement de matériaux fragiles et/ou sensibles aux solvants (délitescents). L'invention vise ainsi à proposer de nouveaux matériaux hydrophobes et/ou lipophiles obtenus par un tel traitement, à ouvrir le champ des applications envisageables avec de tels matériaux -notamment avec des matériaux fragiles et/ou délitescents tels que le papier-.

L'invention vise aussi à proposer un traitement procurant un caractère hydrophobe et/ou lipophile très prononcé par greffage covalent de groupements hydrophobes pouvant contenir 18 carbones ou plus, résistant aux agressions extérieures et stable dans le temps sur une période de temps très supérieure à un jour, notamment de l'ordre de plusieurs mois ou plusieurs années. L'invention vise aussi à proposer un procédé de traitement aussi efficace, voire même plus efficace, avec les réactifs de greffage ayant un plus grand nombre de carbones.

L'invention vise aussi en particulier à proposer un procédé de traitement permettant de rendre hydrophobes les pare-brise de véhicules sur une longue durée, notamment sur plusieurs mois.

L'invention vise aussi à permettre d'effectuer un tel traitement in situ, c'est à dire sur le lieu d'utilisation du matériau solide, sans nécessiter son transport sur un site spécifique de traitement.

L'invention vise en outre à proposer un procédé permettant de traiter rapidement de grandes surfaces de matériau solide, de sorte qu'il est applicable à l'échelle industrielle avec une bonne productivité et permet un traitement homogène de pièces de grandes dimensions (pare-brise, rouleaux de papier d'impression à haute vitesse de défilement...).

Pour ce faire, l'invention concerne un procédé de traitement d'un matériau solide dont la structure chimique définit des fonctions hydrophiles protogènes réactives accessibles aux gaz en vue du greffage covalent de groupements hydrophobes sur ces fonctions hydrophiles protogènes, caractérisé en ce que :

- on choisit au moins un réactif de greffage RX, où R est un groupement hydrophobe, adapté pour pouvoir être à l'état liquide sous pression atmosphérique à une température d'au moins 200°C et pour pouvoir réagir sur lesdites fonctions hydrophiles au moins sous certaines conditions réactionnelles en produisant un greffage covalent de groupements hydrophobes R sur lesdites fonctions hydrophiles avec formation d'un composé HX volatil dans les conditions réactionnelles,
- on réalise au moins une microdispersion d'une composition liquide comprenant au moins un réactif de greffage RX, sur au moins une partie du matériau solide,
- on applique, sur ladite microdispersion, au moins un courant gazeux, neutre vis-à-vis de la réaction de greffage de RX sur lesdites fonctions hydrophiles, à une température inférieure à la température d'ébullition du(des) réactif (s) de greffage RX, de sorte que la réaction de greffage s'effectue par diffusion du(des) réactif(s) de greffage en milieu hétérogène sur toutes les fonctions hydrophiles accessibles aux gaz du matériau solide (principalement sur celles situées à l'aval de la microdispersion par rapport au sens de déplacement du courant gazeux), et uniquement sur ces fonctions.

Par "fonction hydrophile protogène réactive" on entend toute fonction hydrophile donneur d'hydrogène de type -YH où Y est un hétéro-atome, et apte à réagir chimiquement avec un groupement hydrophobe pour permettre entre eux l'établissement d'une liaison covalente, et en particulier toute fonction hydrophile ayant au moins un hydrogène actif dans une réaction d'acylation (-OH,-NH2, Si(OH)...).

Pour être réactive, une fonction hydrophile ne doit pas être déjà impliquée dans une autre liaison telle qu'une liaison hydrogène constitutive ou une liaison ionique.

Par "greffage covalent", on désigne toute liaison covalente entre un groupement et des molécules constitutives du matériau solide.

Par "microdispersion", on entend une dispersion de gouttelettes liquides réparties sur le matériau solide, notamment ayant un diamètre moyen inférieur à 100μm. typiquement de l'ordre du micron ou moins.

Une microdispersion selon l'invention peut être réalisée sur au moins une partie d'au moins une première face externe libre du matériau solide (par nébulisation dirigée sur cette première face externe libre du matériau solide, ou application d'un support solide chargé de composition liquide au contact de cette première face, ou mouillage par exemple par immersion instantanée dans un bain de composition liquide comprenant un solvant volatil puis évaporation de ce solvant volatil) et/ou au sein du matériau solide sur une partie ou sur la totalité de son épaisseur, si le matériau solide est poreux (par nébulisation sur au moins une partie d'au moins une première face externe libre du matériau solide, ou application d'un support solide chargé de composition liquide au contact de cette première face, ou mouillage de cette première face). Avantageusement et selon l'invention, pour réaliser ladite microdispersion, on applique une quantité de composition liquide contenant au moins un réactif de greffage, au contact d'au moins une première face externe libre du matériau solide.

Avantageusement et selon l'invention, on applique un courant gazeux sur au moins une face externe libre du matériau solide identique ou non à ladite première face.

On réalise de préférence la microdispersion sur le matériau solide avant d'appliquer le courant gazeux sur le matériau solide.

En variante, on peut aussi appliquer le courant gazeux sur le matériau solide en même temps que l'on réalise au moins une microdispersion. On doit veiller dans ce cas à éviter une vaporisation de la composition liquide avant qu'elle ne soit placée au contact du matériau solide pour réaliser la microdispersion.

Avantageusement et selon l'invention, on réalise au moins une microdispersion d'au moins une composition liquide comprenant au moins un réactif de greffage RX par nébulisation dirigée vers le matériau solide (c'est-à-dire avec une buse dirigée vers une face du matériau solide) et/ou par contact de ladite première face avec au moins un support solide préalablement chargé en une composition liquide principalement constituée d'au moins un réactif de greffage RX à l'état liquide, et/ou en mouillant le matériau solide avec une composition liquide formée d'une solution d'au moins un réactif de greffage RX dans un solvant neutre volatil. Ledit support solide chargé préalablement en composition liquide peut être choisi parmi un tampon absorbant appliqué sur le matériau solide (par exemple du type feutre), un tampon non absorbant (par exemple du type tampon dateur), un rouleau absorbant ou non entraîné en rotation pour rouler sur ladite première face du matériau solide (par exemple du type rouleau à peindre ou cylindre encreur de machine d'imprimerie), un pinceau ou équivalent.

Pour mouiller le matériau solide, on peut l'immerger instantanément dans un bain de la composition liquide. Dès qu'il est sorti du bain, le solvant neutre volatil s'évapore, ne laissant en place que des micro-gouttelettes de réactif (s) de greffage RX dispersées sur le matériau solide.

La quantité de composition liquide appliquée doit être très faible pour permettre notamment l'accès du courant gazeux aux fonctions hydrophiles protogènes accessibles aux gaz et l'entraînement du réactif de greffage RX par ce courant gazeux. La microdispersion doit en particulier être perméable aux gaz. A défaut, le procédé selon l'invention pourrait être effectué mais nécessiterait inutilement une durée beaucoup plus importante, le courant gazeux ayant d'abord pour effet de chasser l'excès de composition liquide jusqu'à l'obtention d'une véritable microdispersion. De la faible quantité de réactif RX de greffage découle une faible production de HX formé.

La composition liquide utilisée peut être formée d'un réactif de greffage RX ou d'un mélange de réactifs de greffage RX à l'état liquide, sans solvant. Dans ce cas, on note que la composition liquide ne migre en général pas au sein du matériau solide, même lorsque celui-ci est poreux. Par contre, dès application du courant gazeux, le réactif de greffage RX migre vers les fonctions hydrophiles situées à l'aval.

La composition liquide peut aussi incorporer un solvant, notamment un solvant neutre volatil dans le cas notamment d'une microdispersion réalisée par mouillage. Ce solvant volatil est par exemple choisi dans le groupe formé par les éthers de pétrole, les esters d'alkyle de bas poids moléculaire (tel que l'acétate d'éthyle), les solvants chlorés (tels que le trichloréthylène).

Avantageusement et selon l'invention, on dirige le courant gazeux vers au moins une face externe libre dudit matériau solide avec une composante de vitesse perpendiculairement à cette face qui est non nulle, le courant gazeux étant appliqué sur cette face externe avec une vitesse d'incidence non nulle.

Avantageusement et selon l'invention, on applique le courant gazeux en continu et on évacue un flux gazeux issu dudit matériau solide de façon à empêcher toute recirculation sur ledit matériau solide. Le flux gazeux issu en continu du matériau solide permet notamment d'évacuer en continu le composé HX volatil formé. La quantité de HX formé étant très faible, son évacuation dans l'atmosphère libre ou son retraitement ne pose pas de problème.

Il est à noter en particulier que contrairement aux procédés antérieurs de traitement en phase vapeur, dans un procédé selon l'invention, la microdispersion de réactif(s) de greffage est à l'état liquide sur ou dans le matériau solide, le courant gazeux est à une température inférieure à la température d'ébullition du(des) réactif(s) de greffage, et on réalise le procédé sans recirculation, c'est-à-dire en circuit ouvert (en particulier sans enceinte de confinement des gaz au contact du matériau libre). Il en résulte des phénomènes de diffusion et de réaction sur les fonctions hydrophiles du matériau solide, qui sont complètement différents dans leur nature et leurs effets.

Le courant gazeux appliqué selon l'invention sur le matériau solide a pour fonction d'entraîner le réactif de greffage initialement placé microdispersé à l'état liquide sur le matériau solide, sur l'ensemble des sites des fonctions hydrophiles protogènes réactives accessibles aux gaz et d'en éliminer l'excès éventuel ; de permettre que la réaction de greffage puisse s'effectuer ; d'entraîner le composé HX volatil formé par la réaction ; de grandement favoriser la cinétique de réaction par élimination de HX et déplacement du réactif de greffage depuis les sites déjà greffés vers les sites non encore greffés.

En effet, une réaction entre un matériau solide présentant à sa surface des fonctions réactives YH et un réactif de greffage RX, s'écrit selon le schéma (I) suivant :

$$(\text{Matériau})\text{-YH} + \text{RX} \underset{\overset{\longrightarrow}{K2}}{\overset{K1}{\longleftarrow}} (\text{Matériau})\text{-YR} + \text{HX (I)}$$

où HX est un composé volatil, et K1 ET K2 sont les constantes de vitesse dans le sens de la formation et, respectivement, de la dissociation. La vitesse de la réaction s'écrit :

$$V = K1 [YH] [RX] - K2 [YR] [HX]$$

Au début, la réaction va s'effectuer avec une grande vitesse puisqu'il n'y a aucune contribution négative du deuxième terme de l'expression. Dans un système clos, cette vitesse diminue toutefois rapidement avec l'augmentation de la concentration de YR et de HX et tend à s'annuler. La réaction n'est pas complète, elle tend à parvenir à un équilibre. Pour permettre à la réaction de se poursuivre, il est nécessaire de diminuer la concentration de YR et de HX ou d'augmenter celle de RX.

Dans l'art antérieur ceci est, par exemple, réalisé en phase liquide en ajoutant soit un large excès de réactif RX, soit une base pour piéger HX quand celui-ci est un acide. En phase vapeur, on cherche dans l'art antérieur à augmenter l'excès de réactif de greffage en maintenant les vapeurs de réactif de greffage RX dans une enceinte de confinement au contact du matériau solide à traiter, avec une pression de vapeur la plus élevée possible.

Avantageusement et selon l'invention, on place le matériau solide dans un espace de traitement adapté pour minimiser, voire empêcher, selon les caractéristiques du courant gazeux, tout retour sur le matériau solide du flux gazeux issu du matériau solide. Si le matériau solide est non poreux ou faiblement poreux, l'espace de traitement doit être suffisamment grand dans la direction transversale par rapport au courant gazeux incident pour permettre l'évacuation du flux gazeux sans recirculation vers le matériau solide. Les parois latérales de l'espace de traitement entourant le matériau solide dans la direction transversale ne doivent pas venir au contact du matériau solide.

S'il est parfaitement poreux, on peut placer le matériau solide dans un espace de traitement moins grand dans la direction transversale, notamment sensiblement de même dimension transversale que le matériau solide. Mais on applique alors le courant gazeux et on évacue le flux gazeux issu du matériau solide en circuit ouvert.

Que le matériau solide soit poreux ou non poreux, avantageusement et selon l'invention, on place ledit matériau solide dans un espace de traitement adapté selon les caractéristiques du courant gazeux pour que la quantité de flux gazeux issue dudit matériau solide pouvant être à nouveau ramenée sur ledit matériau solide par le courant gazeux soit nulle ou négligeable. Par exemple, on place le matériau solide en étuve ventilée ou en atmosphère ouverte sous une hotte aspirante évacuant ledit flux gazeux vers l'extérieur. L'espace de traitement est adapté pour que le composé HX formé soit extrait du matériau solide au fur et à mesure de sa formation, par dilution, l'espace de traitement étant suffisamment grand, et/ou par une évacuation forcée. Avantageusement l'espace de traitement n'est donc pas hermétiquement clos mais est au contraire ouvert. Le procédé selon l'invention peut être mis en oeuvre à l'air libre en atmosphère ouverte.

Les composés HX et RX sont entraînés par le courant gazeux à des vitesses extrêmement différentes puisqu'ils présentent des volatilités très différentes. Ils sont donc complètement séparés l'un de l'autre, et séparés également des sites du matériau déjà greffés. Le simple fait d'appliquer un courant gazeux permet de maintenir la vitesse de la réaction à son niveau initial très élevé en soustrayant constamment et très efficacement les deux produits de la réaction (le matériau traité YR et HX), du milieu réactionnel. Le milieu réactionnel n'est donc pas statique comme dans les systèmes réactionnels antérieurs mais migre rapidement au travers du matériau solide en provoquant sa transformation au cours de son passage. Ce déplacement favorise la réaction et augmente considérablement sa cinétique, de même que son rendement puisqu'il n'est plus nécessaire de travailler avec un excès de réactif. Il permet d'éviter par ailleurs des effets éventuellement délétères de HX sur le matériau. La diffusion du réactif liée à sa migration permet par ailleurs d'assurer le greffage complet de l'ensemble des sites du matériau.

Le courant gazeux est avantageusement choisi de façon à être lui-même aussi neutre que possible vis-à-vis de la réaction chimique de greffage, c'est-à-dire qu'il ne doit pas réagir lui-même sur les fonctions hydrophiles réactives, ni avec le réactif de greffage, ni empêcher leurs réactions mutuelles.

En particulier, le courant gazeux est aprotique. Ainsi, il ne contient pas -ou contient une quantité aussi faible que possible- de fonctions protogènes telles que -OH, -NH2, -SiOH, -SH. De même, le courant gazeux ne contient pas -ou contient une quantité aussi faible que possible- d'eau. Egalement, le courant gazeux ne contient pas -ou contient une quantité aussi faible que possible-de composé HX. Il est exempt de réactif de greffage RX gazeux. Avantageusement, le courant gazeux est exempt de réactif de greffage RX avant d'être appliqué sur la microdispersion.

Néanmoins, il est à noter que l'on peut, dans une variante de mise en oeuvre opératoire de l'invention, appliquer simultanément un courant gazeux et un courant de réactif(s) de greffage sous forme d'une nébulisation dirigés sur au moins une face externe libre du matériau solide. Dans ce cas, le courant gazeux contient le(les) réactif(s) de greffage à l'état liquide, et il est souhaitable que la température du courant gazeux soit aussi faible que possible pour éviter toute vaporisation du(des) réactif(s) de greffage avant l'arrivée sur le matériau solide. Mais il faut alors prévoir une étape subséquente lors de laquelle on applique un courant gazeux exempt de réactif de greffage RX, à plus haute température pour favoriser la réaction de greffage.

On constate, en pratique, que le procédé selon l'invention peut être effectué avec de l'air ambiant et avec un matériau non séché préalablement. Le courant gazeux peut ainsi être tout simplement de l'air atmosphérique ou de l'air sec. On peut aussi utiliser tout autre gaz neutre aprotique, par exemple de l'azote pur ou un gaz organique tel que le dioxyde de carbone, notamment pour éviter les phénomènes d'oxydation du matériau ou du réactif.

Les caractéristiques physiques du courant gazeux (vitesse, débit, température, pression, dimensions) sont adaptées en fonction du matériau solide à traiter et des conditions opératoires retenues. En particulier, on choisit un courant gazeux ayant une vitesse suffisamment faible pour que le temps de séjour du réactif de greffage sur le matériau à la température de réaction choisie soit suffisamment important pour lui laisser le temps de réagir avec l'ensemble des sites à traiter du matériau solide (fonctions hydrophiles protogènes réactives accessibles aux gaz), compte tenu de la cinétique de réaction. Par ailleurs, on utilise un courant gazeux à une température supérieure à la température de fusion du(des) réactif(s) de greffage RX, et choisie pour favoriser l'entraînement du(des) réactif(s) de greffage par le courant gazeux, et la réaction de greffage des groupements hydrophobes R sur les fonctions hydrophiles du matériau solide à traiter.

A cet égard, il est à noter que le réactif de greffage RX est entraîné par le courant gazeux mais subit une rétention par le matériau solide. Cet entraînement est réalisé grâce à l'équilibre dynamique qui existe à chaque instant entre les molécules de réactif(s) de greffage présentes à l'état liquide et celles qui existent à l'état gazeux. La valeur de cet équilibre à une température donnée détermine la tension de vapeur du réactif de greffage à cette température. Dans les conditions de l'invention, cet équilibre est très déplacé en faveur de la forme liquide puisque la température de travail est notamment inférieure à la température d'ébullition du réactif de greffage et que la tension de vapeur est donc basse. L'inventeur a néanmoins constaté que le fait d'appliquer un courant gazeux sans enceinte de confinement des vapeurs permet d'entraîner la totalité du réactif de greffage en ne déplaçant en fait que la très faible fraction présente à l'état gazeux. L'équilibre entre les phases liquide et gazeuse étant rompu par le courant gazeux, ceci provoque le passage à l'état vapeur de quelques molécules de réactif de greffage liquide ainsi que, réciproquement, le passage à l'état liquide de quelques molécules précédemment à l'état vapeur. Comme ces dernières ont été entraînées par le flux gazeux, il en résulte en définitive un déplacement de la totalité du réactif de greffage présent sous forme liquide et gazeuse par le courant gazeux vers les fonctions hydrophiles protogènes du matériau solide. Ce passage incessant entre les phases liquide et vapeur permet, en combinaison avec l'effet de déplacement créé par le courant gazeux, l'entraînement général du réactif de greffage au travers du matériau solide sur toutes les fonctions hydrophiles protogènes accessibles aux gaz. On peut ainsi définir un temps de séjour du réactif de greffage RX qui correspond au temps que met le réactif de greffage RX à traverser le matériau solide sous l'effet du courant gazeux. Ce temps de séjour est lié : (i) aux caractéristiques physiques du courant gazeux, et (ii) aux caractéristiques physico-chimiques du réactif de greffage RX (notamment sa tension de vapeur).

En effet, on démontre que :

$$\log tr = a + b.(Teb/To) - \log D$$

où :

tr est le temps de séjour du réactif de greffage RX par unité de longueur de matériau solide traversé,

Teb est la température d'ébullition du réactif de greffage RX à pression atmosphérique, qui est supérieure à 200°C,

To est la température du courant gazeux, inférieure à Teb,

D est le débit volumique du courant gazeux,

a et b sont des constantes.

La réaction de greffage est d'autant plus favorisée, sur le plan du rendement, que le réactif RX a un temps de séjour important sur le matériau solide, et que la cinétique réactionnelle est élevée.

A ce titre, on démontre que le rendement R de réaction s'écrit :

$$R = Vm \times tr$$

où : Vm est la vitesse moyenne de la réaction de greffage.

Or, on sait que Vm répond à la formule :

$$\log Vm = c + d.To$$

où : c et d sont des constantes.

En conséquence :

$$\log R = a + b.(Teb/To) + c + d.To - \log D$$

De ces formules on voit que :

- le rendement de la réaction est peu dépendant de To, température du courant gazeux, ce que l'on vérifie par l'expérience ;
- le rendement dépend essentiellement et exponentiellement de Teb ; on obtient donc les meilleurs rendements, grâce à l'invention, avec les réactifs de greffage les plus hydrophobes (comprenant le plus de carbones), et ce de façon extrêmement surprenante et contrairement à tous les procédés antérieurs ;
- le rendement et le temps de séjour sont favorisés par un faible débit ; le débit minimal et optimal de courant gazeux à utiliser est celui qui permet d'évacuer le composé HX formé ;
- la cinétique moyenne dépendant aussi de façon exponentielle de To, il est possible de choisir To et Teb pour optimiser à la fois la cinétique et le rendement de réaction.

Ainsi, il est à noter qu'un procédé selon l'invention est assimilable en ce qui concerne l'entraînement du réactif de greffage RX par le courant gazeux par rapport au matériau solide, aux phénomènes bien connus de chromatographie en phase vapeur. Par exemple, il est possible de déterminer expérimentalement les temps de séjour sur un matériau solide donné, avec un débit et une température donnés, d'un réactif de greffage, par une expérience de chromatographie en phase vapeur.

En pratique, l'inventeur a déterminé que le temps de séjour des réactifs de greffage RX peuvent être très courts et compatibles avec une exploitation à l'échelle industrielle, notamment avec une mise en oeuvre du procédé selon l'invention en continu.

Si le matériau solide est poreux et si l'on réalise ladite microdispersion de réactif(s) de greffage sur la même face que celle sur laquelle on applique le courant gazeux ultérieurement, on traite l'ensemble du matériau dont toutes les faces externes et le coeur deviennent hydrophobes. Au contraire, dans le cas d'un matériau solide poreux non divisé, si l'on applique le courant gazeux en sens opposé, c'est-à-dire si l'on réalise ladite microdispersion de réactif (s) de greffage sur une face recevant le courant gazeux provenant de l'intérieur du matériau solide, on ne traite que la face sur laquelle la microdispersion a été réalisée. Il est à noter que la(les) face(s) exteme(s) libre(s) du matériau solide recevant le courant gazeux et/ou la microdispersion de réactif(s) de greffage peut(peuvent) être plane(s) ou prendre toute autre forme.

Avantageusement et selon l'invention, on applique le courant gazeux pendant une durée correspondant au minimum au temps de séjour tr, et permettant d'éliminer l'excès éventuel de réactifs de greffage par le courant gazeux. Cette durée est le plus souvent inférieure à 1 min. En général, la durée d'application du courant gazeux sera de l'ordre de quelques secondes, voire même de moins d'une seconde.

Le courant gazeux peut être formé par tous moyens appropriés, par exemple à l'aide d'un ou plusieurs ventilateur(s) disposé(s) pour fonctionner en compression et/ou à l'aspiration.

Avantageusement et selon l'invention X est un halogène, et notamment le chlore. En outre, R est avantageusement un groupement hydrophobe organique contenant moins de 50 carbones. Un groupement organique contenant plus de 6 carbones, notamment entre 8 et 50 carbones, est en général hydrophobe et peut être utilisé à titre de groupement R. Avantageusement et selon l'invention, R est choisi parmi un acyle dérivé d'un acide gras comprenant plus de 14 carbones - notamment entre 18 et 50 carbones-. Avantageusement et selon l'invention, RX peut être un halogénure d'acyle aliphatique dérivé d'un acide gras comprenant plus de 14 chaînons -CH$_2$. Comme mentionné ci-dessus, les critères les plus importants sont le point d'ébullition Teb et le caractère hydrophobe.

La température d'ébullition Teb à pression atmosphérique de chaque réactif de greffage RX est supérieure à 200°C. De la sorte, il est certain que le réactif de greffage est à l'état liquide à la température et à la pression du courant gazeux.

Au contraire, dans les procédés antérieurs en phase vapeur, on utilise des composés dont la température d'ébullition est la plus proche possible de la température de traitement.

On vérifie d'ailleurs expérimentalement dans un traitement selon l'invention que si l'on mélange un premier réactif de greffage RX de Teb très inférieure à 200°C et un second réactif de greffage RX de Teb très supérieure à 200°C, seul le second réactif est greffé.

Avantageusement et selon l'invention, lorsque le matériau solide comprend des fonctions hydrophiles réactives appartenant au groupe formé des fonctions alcool -OH, amino -NH2, et mercapto -SH, on choisit au moins un réactif de greffage RX dans lequel R est un acyle qui peut être aliphatique ou aromatique, contenir ou non un ou plusieurs hétéro-atomes, être saturé ou insaturé. Par exemple, R peut être un groupe alkyle perfluoré, dont le caractère hydrophobe est beaucoup plus marqué que le groupe alkyle perhydrogéné de même squelette carboné. Mais R incorpore alors des fonctions telles que des fonctions amides permettant, pour un même nombre de carbones, d'augmenter la température d'ébullition et le rendement de la réaction de greffage.

Avantageusement et selon l'invention, lorsque le matériau solide comprend des fonctions hydrophiles réactives appartenant au groupe formé des fonctions -SiOH, -OH, -NH2, et -SH, on choisit au moins un réactif de greffage RX dans lequel R est un groupement R1-Si-, où R1 est un groupement hydrophobe organique. Avantageusement et selon l'invention, R1 contient plus de 6 carbones et moins de 50 carbones, et est un alkyle ou un aryle, contenant ou non un ou plusieurs hétéro-atomes (par exemple du fluor), saturé ou insaturé.

Lorsque le matériau solide comprend au moins une matière cellulosique (papier, textile, fibres naturelles ou artificielles, bois...), on choisit au moins un réactif de greffage RX formé d'un halogénure d'acides gras et plus particulièrement du chlorure de l'acide béhénique avec lequel on obtient une hydrophobie significativement supérieure à celle obtenue avec les autres chlorures d'acides de poids inférieur. Le chlorure de l'acide stéarique peut aussi avantageusement être utilisé pour de nombreuses applications, compte tenu de son faible prix. Plusieurs réactifs de greffage distincts peuvent être greffés simultanément soit en les mélangeant et en les mettant simultanément au contact de courant gazeux, soit en utilisant des sources distinctes pour chacun d'eux.

Lorsque le matériau solide est du verre ou de la silice, on utilise avantageusement à titre de réactif de greffage un halogéno-organosilane de formule R1-Si-X, par exemple un chloro-octadécyl-silane.

Il est également à noter que les réactifs de greffage pouvant être utilisés selon l'invention peuvent être de nature lipidique, c'est-à-dire que R peut être un groupement hydrophobe lipidique.

L'inventeur a déterminé, ainsi, de façon surprenante, successivement que :

- bien que les réactifs de greffage, qui sont des composés hydrophobes, présentent une température d'ébullition très élevée (par exemple, le chlorure d'acide stéarique bout à 156°C sous 20 Pa), voire ne possèdent pas de point d'ébullition (c'est-à-dire se décomposent avant ébullition), il est en fait possible de réaliser un courant gazeux entraînant de tels composés hydrophobes,
- des réactifs de greffage microdispersés à l'état liquide puis ainsi entraînés dans un courant gazeux présentent une réactivité très nettement supérieure à celle qu'ils ont en solution liquide (dans un solvant aprotique),
- un tel traitement peut être effectué dans des conditions de pression normales ou proches de la normale, et à des températures comprises dans un intervalle entre la température ambiante (20°C) et 250°C, en quelques secondes, sans catalyseur ni solvant appliqué au matériau solide, et avec une efficacité accrue particulièrement surprenante.

Le traitement selon l'invention permet d'obtenir un matériau solide hydrophobe. Il est néanmoins à noter qu'il est possible de conférer au matériau solide d'autres propriétés selon les caractéristiques des groupements hydrophobes R greffés. Ainsi, il est possible de choisir des groupements hydrophobes R qui peuvent présenter en outre d'autres propriétés, notamment être oléophobes (si le groupement R est un groupement organique perfluoré), protecteurs contre les ultraviolets et/ou absorbant des ultraviolets, colorés...

Malgré un traitement extrêmement rapide, le caractère hydrophobe du matériau solide traité selon l'invention est particulièrement net et important. En particulier, on constate que ce caractère hydrophobe est obtenu avec un faible taux de greffage de groupements hydrophobes. Une explication possible de ce résultat extrêmement surprenant tient au fait que pour obtenir ce caractère hydrophobe, il faut et il suffit que toute la surface spécifique accessible aux gaz du matériau solide soit traitée par des groupements hydrophobes. Or, tel est précisément l'effet obtenu par un procédé selon l'invention. En effet, grâce au courant gazeux, tous les sites accessibles aux gaz du matériau solide, même lorsque celui-ci est poreux (macroporeux, mésoporeux ou même microporeux) sont traités. Et, contrairement aux procédés antérieurs en phase liquide, la structure interne du matériau solide n'est pas affectée par le traitement selon l'invention.

Dans la plupart des cas, on constate également que le caractère hydrophobe du matériau solide ainsi traité selon l'invention, présente une très grande durabilité (résistance dans le temps à des environnements destructeurs du caractère hydrophobe). Néanmoins, l'inventeur a également déterminé, dans le cas des fibres ou des structures fibreuses contenant des macromolécules polymériques, que cette durabilité est par ailleurs liée au taux de réticulation des macromolécules polymériques. En particulier, si ces macromolécules polymériques ne sont pas réticulées ou sont peu réticulées, la durabilité du caractère hydrophobe est faible. Par exemple, dans le cas d'un tissu en coton, le caractère hydrophobe tend à disparaître après lavage par un détergent. Il en va de même, par exemple dans le cas de certains polysaccharides tels que l'amidon ou le dextrane, dont les molécules présentent une très grande mobilité rotationnelle. Ainsi, un procédé selon l'invention, lorsqu'il est appliqué au traitement d'une fibre ou d'une structure fibreuse naturelle ou artificielle comprenant des macromolécules polymériques, est caractérisé en ce qu'on effectue au préalable un traitement de réticulation de macromolécules polymériques (par exemple par réaction avec l'épichlorhydrine).

Par contre, lorsque le matériau solide à traiter présente préalablement une structure rigide, par exemple minérale, ou des macromolécules polymériques réticulées, il n'est pas nécessaire d'effectuer au préalable un traitement de réticulation. Tel est le cas en particulier du bois, du verre et de la laine de verre, de la silice...

En outre, avantageusement et selon l'invention, après avoir effectué le traitement par le courant gazeux et le (les) réactif(s) de greffage, on enduit ensuite au moins une face externe libre du matériau d'une composition hydrophobe, par exemple à base d'huiles de silicone, de cires... En effet, ces compositions ont alors une affinité très forte avec le matériau traité selon l'invention, et on constate en pratique une amélioration nette de la résistance à la mouillabilité.

Le procédé selon l'invention présente de nombreux avantages par rapport à l'art antérieur et notamment les suivants :

- les temps de réaction très rapides permettent de travailler à des températures relativement élevées ; le matériau et le réactif de greffage ne sont en effet soumis à ces températures élevées que pendant un temps très court ;
- les sous-produits de réaction délétères comme les acides halogénés gazeux, sont produits en très faibles quantités et entraînés dans le courant gazeux ; en particulier, la réaction peut être réalisée sur des matériaux colorés ou avec des réactifs de greffage relativement fragiles ; ceux-ci peuvent, en effet, être facilement préparés extemporanément, in situ, et utilisés avant qu'ils ne se décomposent ;
- il est possible de minimiser encore l'altération du matériau solide et des réactifs de greffage en utilisant pour former le courant gazeux avec un gaz ou un mélange gazeux inerte notamment l'azote ;
- la réaction a lieu sans aucun solvant ni catalyseur, et ne génère que des sous produits faciles à traiter ; elle ne pose donc pas de problèmes de sécurité ni d'environnement ;
- la réaction peut être effectuée avec de nombreux réactifs commerciaux, peu onéreux pour la plupart ;
- dans de nombreux cas, le matériau traité ne nécessite aucun lavage ni traitement ultérieur ;
- le procédé est très simple et ne nécessite pas la mise en oeuvre de conditions sévères d'anhydricité ni d'atmosphère inerte ni d'enceinte de confinement ; dans la plupart des cas, l'air ambiant peut être utilisé comme gaz vecteur et le matériau solide peut être utilisé sans séchage préalable ;
- toute la surface accessible aux gaz, et seulement celle ci, est traitée ; il en résulte une meilleure efficacité des réactifs de greffage pour la modification des propriétés de surface du matériau ;
- l'absence de solvant permet le traitement de matériaux contenant des composants sensibles à ces derniers ;
- dans de nombreux cas, il est possible de travailler sous pression atmosphérique, à des températures moyennes, avec de l'air ambiant comme courant gazeux, et en utilisant des quantités très faibles de réactifs de greffage commerciaux ; le procédé est donc alors extrêmement simple à mettre en oeuvre et très économique ; il permet notamment d'effectuer le traitement à grande échelle en continu de matériaux à faible valeur ajoutée, comme le papier ou la sciure de bois ;
- il est possible de traiter aisément in situ, en continu ou non, de grandes surfaces de matériau solide ;
- les matériaux traités selon l'invention présentent des propriétés d'hydrophobicité de meilleure qualité que ceux obtenus par les procédés antérieurs en phase liquide ou en phase vapeur statique ; il est possible en particulier de greffer des groupements hydrophiles présentant un grand nombre de carbones, le rendement de réaction augmentant avec le nombre de carbones.

L'invention permet ainsi d'obtenir un matériau solide comprenant sur toute sa surface spécifique accessible aux gaz, et uniquement sur cette surface, des groupements hydrophobes greffés de façon covalente pouvant comprendre entre 8 et 50 carbones. En particulier, l'invention concerne un matériau formé d'une structure minérale notamment de verre.

Un tel matériau solide ne peut pas être obtenu dans l'art antérieur.

Il est à noter en particulier dans le cas des matériaux pouvant être traités en profondeur, notamment les matériaux cellulosiques, que les taux de greffage obtenus en phase liquide avec les réactions décrites dans l'art antérieur sont largement supérieurs aux taux de greffage obtenus avec un traitement selon l'invention correspondant aux greffages des groupements hydrophobes sur toute la surface spécifique accessible aux gaz, et uniquement sur cette surface. Malgré cela, le caractère hydrophobe d'un matériau selon l'invention est amélioré.

L'invention s'applique à ce titre à de très nombreux matériaux solides différents. Ainsi, un matériau solide selon l'invention peut être :

- un matériau solide perméable aux gaz, le procédé selon l'invention n'affectant pas la propriété de perméabilité aux gaz du matériau,
- un matériau solide biodégradable, le procédé selon l'invention n'affectant pas les propriétés de biodégradabilité du matériau,
- un matériau solide coloré, le procédé selon l'invention n'affectant pas la coloration du matériau,
- un matériau solide essentiellement formé de matière(s) macromoléculaire(s) polymérique(s) réticulée(s) (lorsque l'on souhaite une durabilité suffisante du caractère hydrophobe) ou même non réticulée(s) (si la durabilité n'est pas recherchée ou au contraire, si une faible durabilité est recherchée),
- un matériau solide essentiellement formé de matières cellulosiques,
- un matériau solide formé d'une structure fibreuse naturelle ou artificielle se présentant en nappe ou sous forme divisée - notamment un papier, une structure à base de bois, ou une structure textile- imperméable à l'eau et aux solutions aqueuses et/ou absorbant les corps gras,
- un matériau solide formé d'une structure minérale poreuse ou non -notamment de verre ou de silice-.

Il est également à noter que le matériau solide selon l'invention peut être poreux ou fibreux, mais n'est pas nécessairement poreux ou fibreux. En particulier, le matériau solide selon l'invention peut aussi être du verre (en feuille, plaque, bloc ou laine de verre), ou de la silice. Dans le cas du verre, on obtient un verre à face externe libre hydrophobe, c'est-à-dire qui ne retient pas l'eau. La durabilité du caractère hydrophobe est extrêmement grande.

Dans le domaine du traitement de produits à base de silice, l'invention peut être utilisée pour la modification des propriétés de surface des vitres et notamment les pare-brise d'automobile.

Il existe en effet à la surface du verre de nombreuses fonctions SiOH polaires, ce qui permet à l'eau de mouiller la surface du verre. En cas de pluie, la visibilité au travers des pare-brise est fortement altérée à cause de la grande taille des gouttes résultant de la mouillabilité du verre, et il est bien sûr nécessaire d'utiliser des essuie-glaces. De très nombreux travaux ont été réalisés pour rendre la surface du verre plus hydrophobe et favoriser la déperlence des gouttes d'eau. Les techniques antérieures envisagées reposent soit sur une simple enduction cireuse soit sur la réalisation d'un film polymérique à la surface du verre.

L'invention permet d'obtenir une excellente hydrophobie des pare-brise. L'hydrophobie obtenue a en particulier un caractère durable qui permet d'améliorer grandement la visibilité à travers le pare-brise sur une période d'au moins 6 mois dans des conditions normales d'utilisation.

Ainsi, l'invention concerne un matériau solide formé d'une structure minérale -notamment de verre ou de silice-, comprenant sur toute sa surface spécifique accessible aux gaz et uniquement sur cette surface, des groupements hydrophobes greffés de façon covalente, ces groupements hydrophobes comprenant entre 8 et 50 carbones.

L'invention s'étend aussi à un pare-brise traité selon l'invention, c'est-à-dire un pare-brise de véhicule, caractérisé en ce qu'il est au moins partiellement formé d'un verre comprenant au moins une face destinée à être au contact des intempéries qui est rendue hydrophobe par greffage covalent de groupements hydrophobes ayant 8 et 50 carbones.

Avantageusement et selon l'invention on traite au moins une partie d'une face de pare-brise de véhicule destinée à être placée au contact des intempéries.

L'invention peut fait l'objet de très nombreuses autres applications pratiques. Une structure fibreuse cellulosique selon l'invention peut ainsi par exemple servir pour l'obtention de sous-vêtements, de serviettes ou de couches-culottes de protection.

Egalement, elle peut servir pour l'obtention de pansements imperméables à l'eau et aux solutions aqueuses et perméables aux gaz. Un tel pansement est particulièrement efficace dans la mesure où il évite toute contamination bactérienne par les solutions aqueuses et facilite la cicatrisation compte tenu de son caractère perméable aux gaz.

L'invention permet également l'obtention, de façon alternative aux procédés antérieurs connus d'imperméabilisation, de vêtements imperméables à l'eau, et plus particulièrement de vêtements imperméables à l'eau liquide et perméables à l'air. Plus généralement, l'invention permet l'obtention de structures textiles imperméables à l'eau et perméables à l'air.

L'invention permet également l'obtention d'un papier hydrophobe perméable aux gaz, biodégradable ou non, coloré ou non. Un tel papier peut faire l'objet de très nombreuses applications, et notamment à titre d'emballage imperméable à l'eau et aux solutions aqueuses et perméable à l'air, à titre d'emballage ou de sac imperméable à l'eau et aux solutions aqueuses et biodégradables, ...

En particulier, l'invention est applicable pour l'obtention de papier d'impression. Le papier d'impression communément utilisé dans les imprimantes, les photocopieuses, les imprimeries et pour les travaux d'écriture doit présenter une hydrophobie partielle. Celle-ci a pour but de permettre la diffusion des encres à base aqueuse dans la texture du papier mais de façon contrôlée de manière à ce que l'encre ne bave pas comme on peut l'observer par exemple sur un buvard. Cette hydrophobie partielle est obtenue dans l'art antérieur par ajout d'additifs hydrophobes comme les alkyl dimères kétène, les dérivés à longue chaîne de l'anhydride succinique ou les composés de la famille de la rosine. Tous ces composés sont ajoutés à la cellulose en suspension aqueuse ce qui pose des problèmes techniques considérables compte tenu du caractère fortement hydrophobe et non soluble dans l'eau de ces additifs. Il est donc souhaitable de pouvoir disposer d'un procédé permettant d'apporter cette hydrophobie partielle avec un procédé sans nécessiter de suspension aqueuse. Cette hydrophobie partielle peut être apportée par un procédé selon l'invention en utilisant des quantités de réactifs de greffage plus faibles que celles nécessaires dans l'art antérieur pour obtenir un effet de barrière. Les propriétés obtenues vis-à-vis de l'absorption de l'eau et des encres et des qualités d'impression sont au moins aussi bonnes que celles d'un papier d'impression du commerce traditionnel.

Egalement, un matériau solide selon l'invention étant hydrophobe, il est en général également lipophile. Ainsi, le matériau solide selon l'invention peut être appliqué dans tous les cas où l'on recherche les propriétés d'absorption des corps gras.

En particulier, l'invention permet l'obtention d'une composition solide sous forme divisée absorbant les hydrocarbures. Plus particulièrement, l'invention s'applique à l'obtention d'une telle composition solide sous forme divisée absorbant les hydrocarbures et de densité inférieure à celle de l'eau. Par exemple, l'invention permet d'obtenir une composition de copeaux ou de sciure de bois hydrophobe absorbant les hydrocarbures et les huiles et pouvant flotter à la surface de l'eau. Une telle composition peut servir notamment pour le traitement des pollutions aquatiques par les hydrocarbures. L'inventeur a déterminé qu'une telle composition permettait d'absorber des quantités très importantes de corps gras, de l'ordre de 10 à 20 fois son propre poids.

L'invention concerne également un procédé de traitement et un matériau solide caractérisé en combinaison par tout ou partie des caractéristiques mentionnées ci-dessus ou ci-après.

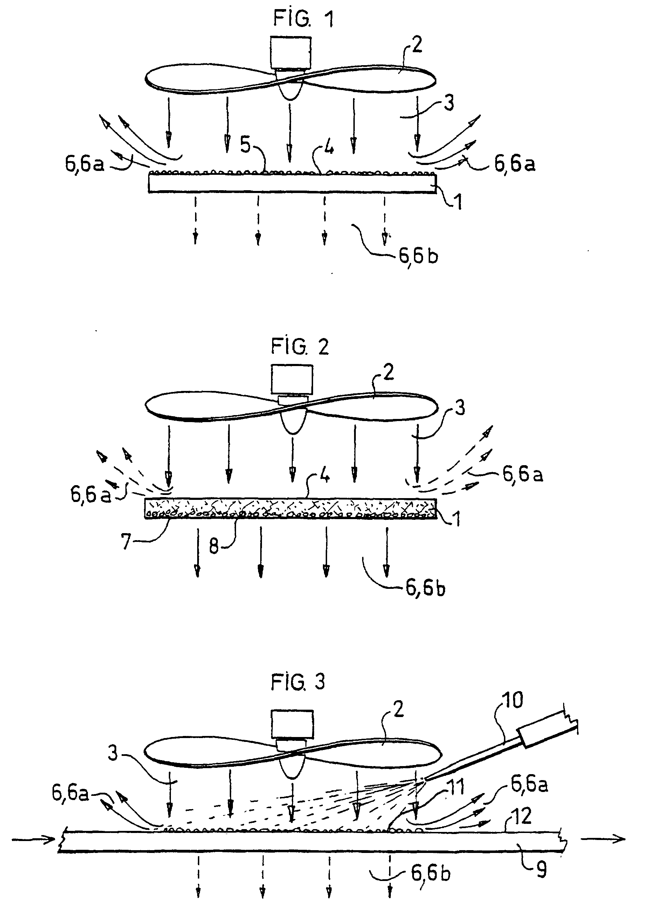

Les figures 1 à 4 annexées sont des schémas illustrant, à titre d'exemples non limitatifs, respectivement quatre modes différents de réalisation d'un procédé selon l'invention.

Sur la figure 1, un échantillon 1 de matériau solide tel qu'une plaque de verre, une pièce de papier ou autre est placée sous un ventilateur 2 rotatif dirigeant un courant gazeux 3, par exemple formé d'air atmosphérique à température ambiante, sur une face externe libre 4 de l'échantillon 1, sur laquelle on a préalablement formé une microdispersion 5 de composition liquide d'au moins un réactif de greffage par exemple grâce à un tampon absorbant imprégné de composition liquide appliqué avec une pression sur la face 4. Le flux gazeux 6 issu de l'échantillon 1 est formé du flux réfléchi 6a et du flux 6b ayant traversé l'échantillon 1 si celui-ci est poreux. Ces flux 6a, 6b sont évacués soit dans l'atmosphère libre ouverte comme représenté, soit dans une hotte aspirante si l'ensemble est placé sous hotte. Si l'échantillon 1 est poreux, il est traité dans toute son épaisseur. S'il n'est pas poreux, seule sa face 4 est traitée.

Dans la variante de la figure 2, on réalise une microdispersion 8 de composition liquide de réactifs de greffage sur une face 7 opposée à la face 4 recevant le courant gazeux 3. L'échantillon 1 est poreux et le courant gazeux 3 traverse son épaisseur. La microdispersion 8 diffuse lorsqu'elle est réalisée sur une certaine épaisseur au sein de l'échantillon. Elle s'évapore ensuite au fur et à mesure du traitement par le courant gazeux 3. Seule la face 7 est ainsi rendue hydrophobe.

La figure 3 illustre un mode de réalisation en continu d'une bande 9 de matériau solide (tel que du papier d'impression) dans lequel on nébulise grâce à une buse 10 de nébulisation, la composition liquide de réactif(s) de greffage sur la partie 11 de la face 12 externe libre de la bande 9 qui passe dans le courant gazeux 3 formé par le ventilateur 2. De préférence, la buse 10 de nébulisation est inclinée à contre-courant du sens du défilement continu de la bande 9 sous le ventilateur 2.

En variante non représentée, on peut aussi placer la buse 10 en amont du courant gazeux 3 par rapport aux sens de défilement de la bande 9. Le traitement comprend alors deux postes successifs : un poste de nébulisation suivi d'un poste d'application du courant gazeux 3.

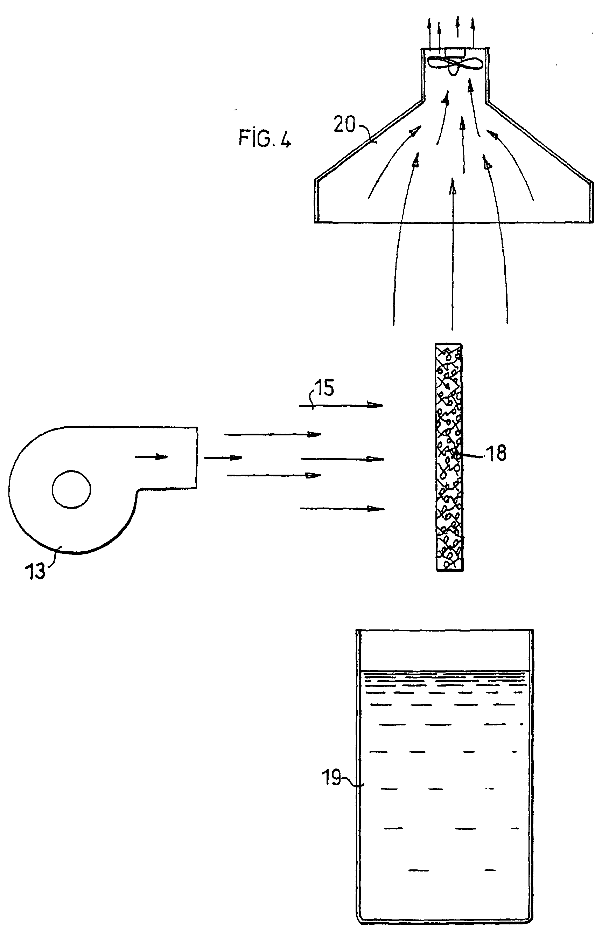

Dans la variante de la figure 4, on utilise un souffleur 13, qui peut être doté de moyens de chauffage du courant gazeux 15, par exemple des résistances électriques. L'échantillon 18 a été préalablement mouillé par une composition liquide de réactif(s) de greffage contenue dans une cuve 19 par simple trempage instantané dans le bain de la cuve 19. L'échantillon 18 est placé sous une hotte aspirante 20.

Cette variante peut être utilisée avec un échantillon 18 poreux qui est alors traité dans l'intégralité de son épaisseur. Plusieurs souffleurs 13 peuvent être utilisés pour traiter chaque grande face de l'échantillon 18.

La variante de la figure 4 peut aussi être utilisée avec un échantillon non poreux, la composition liquide étant formée d'une solution fortement diluée de réactif(s) de greffage dans un solvant neutre volatil évaporé par le courant gazeux ou avant application du courant gazeux, de façon à ne laisser qu'une microdispersion en surface.

Les exemples donnés ci-après à titre non limitatif permettent d'illustrer l'invention.

Exemple 1

On prend un échantillon de papier filtre Whatman N° 2 d'environ 10cm x 10cm d'un poids de 1,034g. On imbibe cette feuille avec 1ml d'une solution de chlorure d'acide stéarique à 0,2% (poids/volume) dans le pentane anhydre. Après évaporation du pentane à l'air, on place la feuille au-dessus d'un verre fritté sous lequel est maintenu un léger vide au moyen d'une trompe à vide et on fait passer un courant d'air chaud (80-100°C) à l'aide d'un sèche-cheveux de laboratoire au travers de la feuille pendant quelques secondes. Bien que l'aspect, le toucher et la résistance mécanique du papier soient apparemment demeurés exactement identiques à l'échantillon initial, on constate que le papier est devenu hydrophobe et ne se mouille pas lorsqu'on verse de l'eau dessus, alors que toute odeur de chlorure d'acide stéarique a disparu. Le papier est ensuite successivement plongé dans un bain de chloroforme, d'acétone et d'alcool éthylique, il est ensuite séché et retesté pour son hydrophobie. Celle-ci est inchangée après le cycle de lavage.

On refait la même expérience mais en utilisant de l'acide stéarique à la place du chlorure d'acide stéarique. Le papier ne présente alors pratiquement aucune hydrophobie.

Cette expérience démontre que l'hydrophobie est bien due au greffage covalent du groupe stéaryle sur les fibres du papier.

Exemple 2

On imbibe un carré de 10cm de côté de papier filtre Whatman N°2 avec une solution de chlorure d'acide stéarique à 0.4% (poids/volume) dans le pentane. Après évaporation du pentane, on place au-dessus d'un verre fritté sous lequel est maintenu un léger vide, deux carrés de papier filtre vierge identiques au premier. Sur ces deux morceaux placés l'un sur l'autre, on place le papier qui a été imbibé par le réactif et on fait passer un courant d'air chaud à travers les trois épaisseurs pendant quelques secondes. On constate que les trois carrés sont devenus hydrophobes alors que celui qui était tout en dessous n'avait aucun contact direct avec celui du dessus. Cette expérience démontre que l'acylation est bien réalisée par la diffusion du réactif liée à l'entraînement par le courant gazeux

Exemple 3

On répète l'expérience de l'exemple 2 dix fois de suite avec trois ronds de papier de même diamètre que le verre fritté et on pèse l'échantillon qui n'est jamais en contact avec le réactif entre chaque expérience. Les résultats obtenus sont les suivants:

- Poids de l'échantillon de papier initial (après déshydratation) : 0,816g,
- Quantité de chlorure d'acide stéarique mis en oeuvre à chaque cycle : 20mg.

| Cycle | 0 | 1 | 2 | 3 | 4 | 5 | 6 | 7 | 8 | 9 |
|-------|-------|-------|-------|-------|-------|-------|-------|-------|------|-------|
| Poids | 0,816 | 0,821 | 0,819 | 0,820 | 0,821 | 0,820 | 0,821 | 0,819 | 0821 | 0,820 |

L'augmentation de poids constatée est très faible, inférieure à 0,6% et elle n'augmente pas avec le nombre d'acylations. Cette expérience démontre que le greffage d'acide gras en phase gazeuse ne requiert qu'une faible quantité de réactif pour dériver l'ensemble des sites disponibles. On constate de plus que la dérivation est quantitative dès le premier cycle d'acylation.

Exemple comparatif 4

On immerge un échantillon de papier filtre épais (Hoefer Scientific Instruments, San Francisco, ref 98087) d'un poids de 6,700g dans une solution de chlorure d'acide (4g) dans le chloroforme (200ml) en présence de 4g de DMAP.

L'échantillon est extrait régulièrement, lavé, séché, pesé puis remis à réagir. Les résultats obtenus sont les suivants :

| Temps (jours) | 0 | 1 | 2 | 4 | 7 |
|---|---|---|---|---|---|
| Poids | 6,700 | 6,715 | 6,732 | 6,740 | 6,747 |

On constate une augmentation lente mais régulière de poids qui atteint 7% au bout d'une semaine. L'hydrophobie n'évolue pas pourtant de manière significative.

Cette expérience démontre, avec l'exemple 3, que les produits obtenus par le procédé en phase liquide sont de nature distincte de ceux obtenus par un procédé selon l'invention.

Exemple comparatif 5

On immerge un échantillon de papier dans une solution de chlorure d'acide stéarique à 1% (poids/volume) dans le pentane. Au bout d'une demi-heure, l'échantillon est extrait, rincé, séché et testé pour son hydrophobie. Aucune hydrophobie significative est observée.

Cette expérience démontre que la cinétique de la réaction en milieu liquide et sans agent de piégeage de l'HCl est beaucoup plus lente qu'avec un procédé selon l'invéntion en phase vapeur.

Exemple 6

On dépose une goutte de solution de chlorure d'acide stéarique à 0,5% (poids/volume) dans le pentane sur une feuille de papier filtre. On marque avec un crayon la limite atteinte par le solvant sur la feuille avant de s'évaporer. La feuille est ensuite placée dans un four ventilé à 150°C pendant 15 secondes puis testée pour son hydrophobie. On constate la présence d'une zone hydrophobe d'un diamètre deux fois plus important que celui atteint par le solvant.

Dans une autre expérience, on dirige pendant quelques secondes, vers la zone de dépôt de la goutte, un courant d'air chaud en provenance d'un sèche-cheveux en le maintenant de façon oblique. On constate une traînée hydrophobe dans la direction du courant d'air chaud.

Cet exemple démontre l'existence de phénomènes de diffusion du réactif qui sont liés à l'entraînement par le courant gazeux.

Exemple 7

100 mg de particules Pharmacia Séphadex G10 (marque enregistrée) sont imbibés avec 0,5 ml d'une solution de chlorure d'acide stéarique à 0,5% (poids/volume) dans le pentane. Après évaporation du solvant, les particules sont placées pendant 15 secondes dans un four à 150°C ou placées dans un lit fluidisé à une température de 100°C pendant 30 secondes. On observe que les particules de G10 sont bien hydrophobes et se maintiennent à la surface de l'eau pendant plusieurs heures.

Les particules sont ensuite mises en présence d'une solution de détergent Hécameg (marque enregistrée) 10mM. On observe que les particules sont mouillées et sédimentent au fond du récipient. On lave alors plusieurs fois les particules avec de l'eau distillée puis on les sèche en les lavant d'abord avec de l'alcool puis avec de l'éther éthylique. Lorsqu'on remet les particules sèches dans de l'eau, on observe qu'elles ont le même comportement qu'initialement et qu'elles flottent à la surface.

On traite des particules Pharmacia Séphadex G100 (marque enregistrée), qui sont beaucoup moins réticulées que les particules G10, exactement de la même manière que les particules G10, On constate que les particules G100 présentent une hydrophobie comme les particules G10, mais seulement de façon transitoire. Elles sédimentent après quelques minutes. Après le traitement au détergent puis lavage et séchage, on constate que les particules ont perdu tout caractère hydrophobe.

Ces expériences démontrent l'importance fondamentale de l'effet de la réticulation sur la durabilité de l'orientation des acides gras et de l'hydrophobie résultante.

Exemple 8

On prend un filtre de pipetman (marque enregistrée) P5000 (Gilson) de diamètre 5mm que l'on emmanche sur une pipette Pasteur. On trempe l'extrémité du filtre dans une solution de chlorure d'acide stéarique pur de façon à ce qu'une très petite quantité (50mg) soit absorbée par le filtre (que l'on pèse avant et après). On laisse l'absorption se poursuivre pendant quelques minutes de façon à ce que tout le réactif soit complètement absorbé par le filtre. On applique alors l'extrémité du filtre sur un morceau de papier pendant une seconde en exerçant une pression modérée.

On place ensuite le papier dans un four ventilé à 150°C pendant 15 secondes et on teste l'hydrophobie du papier. On constate la présence d'une tache hydrophobe autour de l'endroit où on a appliqué l'extrémité du filtre, le diamètre de la tache hydrophobe étant de 1cm, soit deux fois plus important que le diamètre du filtre. Dans une autre expérience on opère de la même façon mais en laissant l'échantillon à l'air libre. Après deux minutes, l'échantillon est testé pour son hydrophobie. On constate alors une tache hydrophobe mais de même diamètre que celui du filtre. La tache présente de plus des irrégularités dues à l'imperfection de l'application.

Dans une autre expérience, on procède à de multiples applications de l'extrémité du filtre sur l'ensemble de la surface du papier, chaque application étant séparée de la suivante par un intervalle de 5mm. On place ensuite le papier dans un four à 150°C pendant 15 secondes et on teste le papier pour son hydrophobie. On constate que l'ensemble du morceau de papier est devenu hydrophobe.

50mg de réactif sont suffisants pour traiter ainsi plus de 50g de papier soit un rapport de 1/1000.

Ces expériences indiquent qu'une température de 150°C accélère fortement (par rapport à une température ambiante) la cinétique de la réaction et la diffusion du réactif dans la matière et permet un traitement complet de l'échantillon en assurant une bonne diffusion du réactif.

Exemple 9

Mesure des angles de contact.

Ces mesures sont effectuées à l'aide d'un appareil à dépôt de goutte d'eau Krüss (marque enregistrée). Les angles de contact à l'avancée sont mesurés en fonction de la nature et du degré d'acylation des matériaux traités selon l'invention et sont suivis pendant une période de 10 minutes. Les tableaux suivants donnent les valeurs d'angles de contact (en degrés) obtenus en fonction du temps, et selon le pourcentage de réactif mis en oeuvre par rapport au poids du papier.

- Avec un papier de laboratoire " Soft, Katrin " de Metsä-Serla (Suède) :

| Pourcentage de réactif | 0,1% | 0,4% | 1% |
|---|---|---|---|
| Temps (min) | | droite/gauche | |
| 0 | 145,3 | 145,2-145,2 | 146,3 |
| 2 | | 143,9-143,9 | |
| 3 | | 143,0-143,0 | |
| 4 | | 141,9-141,9 | |
| 5 | | 140,1-140,1 | |
| 6 | | 138,9-139,9 | |
| 7 | | 136,8-136,8 | |
| 8 | | 134,2-134,2 | |
| 9 | | 132,7-132,7 | |

- Avec un papier Whatman n° 2 :

| Pourcentage de réactif | 0,1% | 0,4% | 1% |
|---|---|---|---|
| Temps (min) | droite/gauche | | |
| 0 | 134,1-134,1 | 131,6 | 128,7 |
| 1 | 131-131 | | |
| 2 | 129,3-139,3 | | |
| 3 | 125,8-125,8 | | |
| 4 | 123,1-123,1 | | |
| 5 | 118,5-118,5 | | |
| 6 | 112,7-112,7 | | |

(suite)

| Pourcentage de réactif | 0,1% | 0,4% | 1% |
|---|---|---|---|
| Temps (min) | droite/gauche | | |
| 7 | 108,4-108,4 | | |
| 8 | 97,6-97,6 | | |
| 9 | 88,9-88,9 | | |

• Avec un papier épais (Hoefer Scientific Instruments, San Francisco, réf. 98087):

| Pourcentage de réactif | 0,1% | 0,4% | 1% |
|---|---|---|---|
| Temps (min) | | droite/gauche | |
| 0 | 147,2 | 147,9-147,9 | 148,2 |
| 1 | | 146,8-146,8 | |
| 2 | | 145,4-145,4 | |
| 3 | | 144,3-144,3 | |
| 4 | | 142,7-142,7 | |
| 5 | | 139,4-139,4 | |
| 6 | | 138,3-138,3 | |
| 7 | | 133,9-133,9 | |
| 8 | | 128,9-128,9 | |
| 9 | | 122,1-122,1 | |

L'ensemble des résultats obtenus indique que les papiers dérivés par des acides gras ont un comportement hydrophobe très marqué. A titre de comparaison, l'angle de contact de la paraffine n'est que de 110°.

La valeur de cet angle est stable au cours du temps (compte tenu de l'évaporation de l'eau de la goutte), ce qui indique une bonne résistance du matériau à la mouillabilité.

Ces résultats indiquent également que la nature du matériau de départ et la structure même des fibres de cellulose jouent un rôle important dans le caractère hydrophobe du produit final.

Ces résultats confirment par ailleurs le fait que les matériaux sont complètement dérivés par des quantités très faibles de réactif et que l'utilisation de quantités supérieures n'améliore pas significativement leurs propriétés hydrophobes.

Exemple 10

Réticulation du papier Whatman N°2.

On prend un échantillon de papier de 10cm x 15cm que l'on imbibe avec 0,5ml d'épichlorhydrine. On hydrate ensuite l'échantillon avec de la soude 1M et on le place entre deux plaques de verre que l'on maintient serrées l'une contre l'autre à l'aide de pinces. Après deux heures à température ambiante, on enlève les plaques, on lave l'échantillon avec de l'eau distillée de façon à ce que l'eau de lavage soit à un pH complètement neutre. La réticulation se traduit comme prévu par une augmentation très significative de la résistance mécanique du papier à l'état humide. Le papier est ensuite séché et acylé par le chlorure de l'acide stéarique au moyen de l'un des procédés décrits aux exemples précédents.

Le papier réticulé et acylé obtenu précédemment est mouillé avec une solution de détergent (hécameg -marque enregistrée- 40mM) et laissé en contact avec cette solution pendant 2h. L'échantillon est alors lavé avec de l'eau distillée, séché et testé pour son hydrophobicité. On constate que cette dernière est inchangée par rapport à l'échantillon de départ.

La même expérience est réalisée avec du papier non réticulé. Après séchage, le produit est testé pour son hydrophobicité. On constate que cette dernière est très amoindrie par rapport à l'échantillon initial.

Ces expériences démontrent que le papier réticulé présente une hydrophobicité beaucoup plus durable qui persiste même après un traitement par un détergent.

Par contre, l'hydrophobie du papier non réticulé est fortement diminuée par le traitement au détergent.

Exemple 11

La même expérience que dans l'exemple 10 est réalisée avec un morceau de tissu en toile de jute. La réticulation se traduit par une meilleure tenue du tissu et une moindre sensibilité au froissement. Les résultats en terme de durabilité de l'hydrophobie sont analogues. Le tissu peut ensuite être lavé par un détergent sans perdre ses propriétés d'hydrophobie.

Exemple 12

Détermination des propriétés de barrière à l'eau.

Un échantillon de papier Whatman N°2 acylé selon l'invention comme indiqué précédemment est agencé en forme de filtre conique et placé au-dessus d'un bêcher. On verse 50ml d'eau distillée dans le cône. Au bout d'une semaine, on constate que l'eau contenue dans le cône s'est entièrement évaporée sans avoir traversé l'épaisseur du papier.

On réalise la même expérience avec une solution de NaCl 1M. L'eau s'évapore également en laissant derrière elle des cristaux de NaCl.

On réalise la même expérience avec une solution aqueuse d'albumine bovine sérique à 5% (poids /volume). L'eau s'évapore en laissant derrière elle des grains d'albumine. Cette expérience montre que les propriétés d'hydrophobie sont remarquablement stables et insensibles à la force ionique.

Exemple 13

On broie mécaniquement à l'aide d'un appareil, de type mixer ménager, un échantillon de papier acylé selon l'invention (conformément à l'un des exemples précédents) en présence d'eau. On obtient une suspension aqueuse homogène. On porte cette suspension à ébullition et on constate que les fibres captent les microbulles d'air produites par le dégazage de la suspension et remontent à la surface où elles forment un gâteau. Ce phénomène est caractéristique des fibres de papier acylé et n'est pas observé avec des fibres de papier non préalablement traité par un procédé selon l'invention.

Exemple 14

La suspension de papier acylé homogénéisée obtenue à l'exemple 13 est traitée avec de la soude concentrée de façon à obtenir une solution NaOH 1M. La suspension résultante est agitée doucement pendant 24h. Les fibres sont ensuite décantées, lavées et remises en suspension. Cette suspension est ensuite portée à ébullition de la même manière que dans l'exemple précédent. On constate que les fibres de cellulose ne captent plus les bulles d'air et ne remontent pas à la surface. Leur comportement est maintenant identique à celui des fibres non acylées.

Cette expérience montre que les acides gras greffés sont hydrolysés en milieu basique pour redonner la matrice cellulosique de départ.

Exemple 15

Détermination des propriétés de perméabilité à l'air.

On découpe un morceau de papier Whatman N°2 acylé selon l'invention, de façon à ce qu'il ait le même diamètre que des filtres utilisés pour des cellules d'ultrafiltration Amicon (marque enregistrée). Après avoir rempli la cellule avec 1 cm d'eau distillée, on connecte le tuyau de sortie avec le détendeur d'une bouteille d'azote. On constate que dès que l'on applique une pression, même faible, des bulles d'air se dégagent du papier. A l'inverse l'eau ne traverse pas le filtre, même en l'absence de contre-pression.

Cette expérience montre que le traitement selon l'invention n'altère pas du tout les propriétés de perméabilité à l'air du matériau initial.

Exemple 16

Détermination des propriétés de perméabilité aux solvants organiques.

Un échantillon de papier Whatman N°2 acylé selon l'invention est agencé en forme de filtre conique. On verse à l'intérieur et séquentiellement les solvants suivants : chloroforme, éther de pétrole, alcool éthylique, acétone. Aucun de ces solvants n'est retenu par le filtre.

On prépare une émulsion d'eau et d'éther de pétrole, on verse cette émulsion sur le filtre en papier acylé. On constate que le filtre arrête l'eau présente dans l'émulsion mais laisse passer l'éther de pétrole.

Exemple 17

Détermination des propriétés d'affinité pour les hydrocarbures et les corps gras.

Dans un bécher de 250ml on place 100ml d'eau et 1ml de trioléine (huile d'olive). La trioléine forme alors un film superficiel à la surface de l'eau. On introduit 100mg de papier Whatman N°2 acylé selon l'invention découpé en fines lanières que l'on dépose sur le film de trioléine. On constate que le papier s'imbibe avec toute la quantité d'oléine présente. Il se forme une espèce de gâteau pâteux qu'il est possible de sortir de l'eau avec une spatule.

La même expérience est réalisée avec lml de pétrole brut et avec les mêmes résultats.

Ces expériences illustrent l'affinité, en présence d'eau, des corps gras ou hydrophobes pour les matériaux traités selon l'invention.

Exemple 18

Un test comparatif de biodégradabilité est effectué sur un échantillon de papier témoin non traité et sur un échantillon de papier semblable traité selon l'invention (comme dans l'un des exemples précédents).

Chaque échantillon est mis en suspension dans une solution minérale, à raison d'environ 50 mg de carbone soit environ 120 mg de papier (découpage en carrés d'environ 0,5 cm de côté). La détermination exacte a été réalisée par analyse élémentaire. Le milieu est alors ensemencé par inoculum microbien, constitué par un surnageant de boues activées (préaération pendant 4 heures, homogénéisation pendant 2 minutes, puis décantation pendant 1 heure), provenant d'effluents secondaires d'une station d'épuration d'eau. L'incubation a lieu en aérobiose, par aération avec de l'air exempt de $CO_2$. La température (23°C), l'agitation (350 tours/minute), le pH (7,2) et l'aération sont maintenus constants.

La biodégradabilité est suivie par mesure du dégagement de $CO_2$.

Les quantités de carbone sous forme de papier introduites étaient respectivement de 48,8 mg pour le témoin et de 48 mg pour l'échantillon traité selon l'invention. Les résultats sont les suivants :

| Durée du test en jours | TEMOIN | | ECHANTILLON TRAITE | |
|---|---|---|---|---|
| | Carbone piégé en mg (valeurs cumulées | % de bio-dégradabilité | Carbone piégé en mg (valeurs cumulées) | % de bio-dégradabilité |
| 0 | 0,00 | 0,00 | 0,00 | 0,00 |
| 1 | 2,04 | 4,18 | 3,60 | 7,50 |
| 3 | 16,68 | 34,15 | 21,24 | 44,25 |
| 5 | 22,08 | 45,21 | 26,98 | 56,21 |
| 7 | 31,32 | 64,13 | 35,90 | 74,79 |

Cette expérience démontre que les deux échantillons sont biofragmentables du fait de leur disparition au cours du test (le greffage n'altère pas l'accessibilité des cellulases à la cellulose). Le procédé selon l'invention n'altère par les propriétés de biodégradabilité.

Exemple 19

On réalise un spectre infrarouge d'un échantillon de papier Whatman N°2 avant et après traitement selon l'invention, par la technique dite de réflexion multiple qui permet de n'analyser que la surface d'un échantillon. On constate l'apparition de deux bandes intenses à 2918 et 2848 cm-1 correspondant à des vibrations C-H. Ces bandes sont analogues à celles que l'on observe avec le spectre de l'acide stéarique. D'une manière surprenante on n'observe pas par contre de bande intense dans la région des carbonyles entre 1715 et 1750 cm-1. Cette bande est probablement déplacée par suite de la formation de liaisons hydrogènes avec des fonctions hydroxyles non dérivées.

Ce spectre indique que le greffage des acides gras est bien localisé à la surface des fibres.

Exemple 20

On réalise l'acylation selon l'invention d'échantillons de papier Whatman N°2 avec des chlorure d'acide en C2, C4, C6, C8, C10, C12, C16 et C18. Tous les échantillons sont hydrophobes à partir du chlorure d'acide en C8. Aucune réaction significative ne semble notamment se produire avec le chlorure d'acétyle (C2).

Exemple 21

On réalise l'acylation selon l'invention de coton hydrophile, de sciure de bois, d'un morceau de planche, d'un filtre d'acétate de cellulose, de Cellophane, par du chlorure de l'acide stéarique avec un courant d'air chaud issu d'un sèche cheveux comme indiqué aux exemples précédents. Tous ces matériaux deviennent hydrophobes après traitement.

Exemple 22

On réalise la sililation selon l'invention de la laine de verre par le diéthyloctadécyl chlorosilane avec un courant d'air chaud issu d'un sèche-cheveux comme indiqué aux exemples précédents. On obtient un matériau hydrophobe particulièrement non mouillable par l'eau.

Exemple 23

On réalise l'acylation selon l'invention de papier Whatman n° 2 avec le chlorure d'acide béhénique qui est un acide gras avec une chaîne linéaire saturé en C22. Pour ce faire, on dissout 500mg d'acide béhénique dans 100 ml de chloroforme en présence de 500mg de chlorure d'acétyle. Au bout de 15 minutes, on imbibe un échantillon de papier avec la solution chloroformique, on laisse le solvant s'évaporer puis on fait passer pendant 15 secondes un courant gazeux à 150°C sur l'échantillon. La présence d'un excès de chlorure d'acétyle a permis grâce à une réaction de transchloration de préparer extemporanément le chlorure de l'acide béhénique. L'excès de chlorure d'acétyle est ensuite éliminé par le flux gazeux grâce à sa très grande volatilité. Le temps de séjour très court du chlorure d'acétyle n'est, par ailleurs, pas suffisant pour lui permettre de réagir significativement avec le support. On constate que l'acide béhénique est effectivement greffé sur l'échantillon de papier en apportant une hydrophobie très significativement supérieure à celle apportée par l'acide stéarique.

Cette expérience indique qu'il est possible de préparer simplement par transchloration les chlorures d'acides non commerciaux ou fragiles puis de les faire réagir ensuite dans de bonnes conditions. Cette expérience indique également que les propriétés d'hydrophobie sont très dépendantes de la longueur des chaînes d'acides gras. Elle indique aussi que le chlorure d'acétyle dont la température d'ébullition est inférieure à 200°C ne permet pas le traitement contrairement au chlorure d'acide béhénique.

Exemple 24

On réalise la même expérience que dans l'exemple 23 avec l'acide mélissique qui comprend une chaîne linéaire saturée en C30. On obtient une hydrophobie encore supérieure à celle de l'acide béhénique.

Cette expérience confirme que l'hydrophobie est fonction de la longueur de la chaîne grasse et que la réaction a lieu normalement même avec des acides gras de haut poids moléculaire.

Exemple 25

On mélange 1g de chlorure de l'acide heptafluorobutyrique avec 0,4 g d'acide amino-6 caproique et 0,3 g de DMAP en solution dans 10ml de chloroforme. Après 1h à température ambiante, on ajoute 10ml d'eau, on décante la phase chloroformique et on la lave encore deux fois avec 10ml d'eau. On sèche ensuite la phase chloroformique. On ajoute ensuite 100 ml de chloroforme sec et 1g de chlorure d'acétyl. On laisse réagir pendant 15 minutes et on imbibe un morceau de papier avec la solution chloroformique obtenue. On évapore le solvant et on applique un courant gazeux à 50°C pendant 30 secondes sur le morceau de papier. On constate que l'échantillon a acquit des propriétés hydrophobes mais également oléophobes. Il n'est en effet plus capable d'absorber les composés hydrophobes.

Exemple 26

On réalise la réaction en imbibant un morceau de papier avec une solution de chlorure de sulfonyl-2 naphtalène et de chlorure de naphtoyl-2 (10mg/ml) dans le chloroforme, et en appliquant un courant d'air chaud à l'aide d'un sèche-cheveux. On obtient dans les deux cas, le greffage de ces composés à la surface du papier.
Cet exemple démontre que la réaction peut être effectuée avec une variété de composés.

Exemple 27

On prend un morceau de papier filtre épais (Hoefer Scientific instruments, San Francisco, ref 98097) et on applique à l'aide d'un tampon, du chlorure de stéaryl pur sur une des faces. On applique ensuite à l'aide d'un sèche-cheveux un courant gazeux chaud sur la face opposée à celle où l'application du tampon a été faite. On renforce le courant gazeux en plaçant la face de la feuille sur laquelle on a appliqué la microdispersion de réactif, sur un verre fritté où est maintenu un léger vide. On teste ensuite l'hydrophobie sur les deux faces de la feuille. On constate que la face où le chlorure d'acide a été appliqué est devenue hydrophobe alors que la face opposée est restée hydrophile.

Exemple 28

On prépare un anhydre mixte en ajoutant un gramme d'acide stéarique à une solution de un gramme d'anhydre acétique dans 50 ml de chloroforme. On laisse le mélange s'équilibrer pendant 12 h, puis on imbibe un morceau de papier Whatman n° 2 avec la solution et on applique le courant gazeux. On constate que le papier est devenu hydrophobe mais de manière un peu moins nette qu'avec le chlorure de l'acide stéarique.

Exemple 29

On introduit un morceau de papier Whatman n° 2 de 10 cm de hauteur acylé selon l'invention par le chlorure de l'acide stéarique dans une cuve contenant 1 cm d'eau. On introduit également un morceau de papier de la même dimension mais non traité. Après 2 h, on observe que l'eau est montée par capillarité au sommet de l'échantillon non traité alors qu'elle n'est pas montée du tout le long de l'échantillon traité.
Cette expérience indique que le traitement selon l'invention permet d'inhiber le mouillage des papiers et des cartons par capillarité.

Exemple 30

On recouvre partiellement la plaque échangeur d'un congélateur avec une feuille de papier Whatman n° 2 acylé selon l'invention par le chlorure de l'acide stéarique et on met en marche l'appareil en laissant la porte ouverte. Au bout d'une heure, on constate que la partie de l'échangeur situé sous la feuille est recouverte de givre de la même manière que la partie de l'échangeur non recouverte par la feuille. La quantité de givre est identique à celle trouvée sous une feuille de papier non traitée témoin.
Cette expérience démontre que l'eau sous forme de vapeur est capable de traverser les feuilles de papier acylé selon l'invention de la même manière que les feuilles de papier non traitées.

Exemple 31

On imbibe avec de la cire d'abeille fondue un échantillon de papier Whatman n° 2 témoin non traité et un autre préalablement acylé selon l'invention par le chlorure de l'acide stéarique. On place ensuite les deux échantillons dans un récipient contenant de l'eau bouillante. On constate que la cire reste complètement solidaire du morceau de papier acylé selon l'invention tandis qu'elle se détache entièrement du morceau témoin.
Dans une autre expérience, on introduit la cire dans l'eau bouillante où elle fond et on ajoute ensuite les deux échantillons (traité selon l'invention et non traité). L'échantillon non traité coule immédiatement au fond du récipient tandis que l'échantillon traite reste en surface et absorbe toute la cire. Cette expérience indique que l'affinité du papier pour les corps gras a été complètement inversée par le traitement selon l'invention, même en présence d'eau bouillante.

Exemple 32

On applique un spray de traitement imperméabilisant commercial à base de silicone (de marque DECATHLON® ) sur un échantillon de papier Whatman n° 2 acylé selon l'invention par le chlorure de l'acide stéarique et sur un témoin non acylé. On constate que l'échantillon non acylé est devenu à peine hydrophobe tandis que l'échantillon acylé a vu son hydrophobie, déjà forte, encore renforcée par le traitement avec le spray imperméabilisant.

Exemple 33

On prend une feuille de papier de grammage 80 non traité par des agents d'hydrophobilisation. Un carré de 10cm x 10cm est immergé brièvement dans une solution de chlorure d'acide palmitique à 0.05 % (poids/poids) dans l'éther de pétrole. Après évaporation du solvant, le papier est placé dans un four ventilé à 150 °C pendant 10 secondes. La capacité d'absorption d'eau est ensuite mesurée en plaçant le papier dans un bac rempli d'eau pendant une minute et en pesant l'échantillon de papier avant et après l'étape d'hydratation. Les résultats obtenus sont les suivants.

|  | % d'hydratation (poids d'eau/poids du papier) |
|---|---|
| Papier non traité | > 100 |
| Papier d'impression du commerce (en l'état de développement) | 51 |
| Papier traité selon l'invention | 49 |

On constate que la capacité d'absorption d'eau du papier traité par l'invention est bien analogue à celle de papier d'impression du commerce traditionnel.

Exemple 34

Traitement d'un verre flotté du commerce.
La surface à traiter est d'abord nettoyée et activée par une application de nettoyant ménager du commerce tel qu'un dégraissant pour four de cuisine pendant 30 min. La surface est ensuite rincée à l'eau déminéralisée et séchée par soufflage d'air sec à 110°C. On dépose ensuite une solution de chlorosilane à 0,04 % dans de l'éther de pétrole 80/100 anhydre sur la surface à traiter. 1 ml est suffisant pour traiter une surface de 30cm x 30cm et on étale la solution sur la surface jusqu'à évaporation complète du solvant. La réaction est ensuite terminée par l'application d'un courant d'air sec à 150°C pendant quelques secondes. Des témoins sont réalisés en traitant des échantillons de verre activés par immersion dans la solution de chlorosilane en présence de 0.3 % de pyridine anhydre pendant une heure. Tous les échantillons sont ensuite lavés par trempage dans des bains de chloroforme puis de méthanol et enfin séchés à l'air. Le caractère hydrophe obtenu est évalué par détermination de l'angle de contact à l'avancée. Les résultats obtenus sont les suivants :

|  | Témoin (traitement phase liquide) | Procédé selon l'invention |
|---|---|---|
| Diméthyl octadécyl chlorosilane | 108° | 110° |
| Octadécyl trichlorosilane | 112° | 112° |

On constate que les angles de contact obtenus avec les deux réactifs sont pratiquement identiques. Ceci indique que la modification de l'état de surface a bien lieu par l'intermédiaire d'un greffage moléculaire entre les SiOH de la surface du verre et les réactifs et non pas par la formation d'un film polymérique. Dans ce dernier cas, en effet, les résultats obtenus avec le réactif trichloré seraient très supérieurs à ceux obtenus avec le réactif monochloré qui est incapable de former des liaisons de polymérisation.

On procède au traitement par la même méthode d'un pare-brise de voiture mais en utilisant le perfluorooctyl trichlorosilane qui permet d'obtenir une énergie de surface encore plus faible. Ce traitement s'effectue sans nécessiter de démontage ni d'appareillage complexe. On constate que l'hydrophobie obtenue est maintenue pendant une période d'au moins 6 mois (de décembre à juin) dans des conditions normales d'utilisation quotidienne du véhicule.

Exemple 35

Mise en évidence de l'entraînement du réactif de greffage par le courant gazeux.

On utilise un verre sablé dépoli, on dépose une goutte de solution de diméthyl octadécyl chlorosilane à 0,1% dans l'éther de pétrole 80/100. Lorsque le solvant est totalement évaporé, on applique un courant gazeux chaud (150°C) pendant quelques secondes au point de dépôt mais avec une inclinaison par rapport à la perpendiculaire à la surface. Lorsqu'on mouille ensuite le verre, on constate que le verre est devenu hydrophobe au point de dépôt mais également sur le côté opposé de l'origine du courant gazeux en formant une sorte de queue de comète. Cette dernière est plus importante avec le diméthyl octadécyl chlorosilane qu'avec l'octadécyl trichlorosilane traduisant un point d'ébullition plus élevé que ce dernier par rapport au monochlore. Cette expérience démontre que le réactif de greffage a d'abord été entraîné par le courant gazeux et qu'il a réagit ensuite avec la partie du verre sur laquelle il s'est déposé.

Exemple 36

Réalisation de textiles oléophobes.

On synthétise d'abord un réactif de greffage perfluoré de la façon suivante.

20g d'acide perfluorooctanoique sont dissous dans 20ml de chloroforme et on ajoute 2,5g de dicyclohexylcarbodiimide. Après une nuit sous agitation, la dicyclohexyl urée formée est éliminée par filtration et on obtient l'anhydride de l'acide perflorooctanoique. Ce dernier est ensuite mis à réagir avec 5g d'acide aminoll undécanoique pendant une nuit et on rajoute ensuite 3,5 g de chlorure d'acide oxalique. Il se forme alors le composé suivant:

$$CF_3- (CF_2)6 \ CONH- (CH_2)10 \ COCl$$

On prépare une solution de réactif de greffage à 1% dans le chloroforme, on imbibe un morceau de tissu de coton avec la solution obtenue, on évapore le solvant et on soumet le morceau de tissu à un flux d'air chaud à 140° pendant 10 secondes. Le tissu traité est ensuite lavé avec de l'acétone et du chloroforme pour éliminer toute trace du réactif n'ayant pas réagi. Il est ensuite séché et testé pour son oléophobie en déposant à la surface une goutte d'huile végétale d'arachide. On constate que l'huile reste à la surface du tissu sans le mouiller.

Exemple 37

On fait réagir mole à mole l'aminol dodécane avec l'anhydride succinique dans le chloroforme pendant une nuit et on ajoute ensuite un équivalent de chlorure d'oxalyle que l'on fait réagir pendant 4 heures pour conduire au réactif de greffage suivant possédant une chaîne carbonée en C16 :

$$CH_3- (CH_2)11-NCO-CH_2-CH_2-COCl$$

On imbibe cinq carrés de 10cm de côté de papier filtre Whatman N°2 avec 1ml d'une solution de chlorure d'acide à 1% (poids/volume) dans le pentane en faisant varier la nature de l'acide gras : myristique, palmitique, stéarique, béhénique et avec le réactif de greffage en C16 préparé ci-dessus. Après évaporation du pentane, on place les cinq échantillons dans une étuve ventilée pendant un temps identique de 15 secondes. On lave les échantillons dans de l'acétone pour éliminer les réactifs n'ayant pas réagi. On sèche, on laisse ensuite les échantillons se rééquilibrer à l'humidité atmosphérique pendant 4 heures et on pèse la quantité d'acide gras greffée sur les cinq échantillons par rapport au poids de départ. Les résultats obtenus sont les suivants :

| Acide gras | Myristique | Palmitique | Stéarique | Béhénique | Réactif de greffage en C16 |
|---|---|---|---|---|---|
| Quantité greffée (mg) | 0,5 | 1 | 3 | 5 | 5 |

On constate que la quantité d'acide gras greffée augmente de façon exponentielle avec la longueur de la chaîne grasse et sa polarité, donc en fait avec la température d'ébullition des réactifs de greffage.

Exemple 38

On imbibe deux carrés de papier Whatman N°2 avec lml de solution de chlorure d'acide stéariqe à 1% (poids/ volume) dans le pentane. Après évaporation du solvant, on place un des échantillons dans un four ventilé à 150°C pendant 15 secondes et on laisse l'autre sous la hotte à température ambiante (environ 20°C) pendant une nuit. Les échantillons sont ensuite lavés avec plusieurs solvants organiques pour éliminer toute trace de résidus de réactifs, ils sont séchés et laissés à l'air pendant 4 heures. On mesure ensuite par pesée, la quantité de réactif greffée sur le papier. Les résultats obtenus indiquent qu'une quantité identique de 3mg a été greffée sur les deux papiers. Cette expérience permet de vérifier que le rendement de la réaction est peu dépendant de la température. Au contraire, la cinétique réactionnelle en dépend de façon exponentielle.

Exemple 39

On utilise une buse d'atomisation double flux alimentée par du chlorure d'acide stéarique pur avec un débit de liquide de 0,6ml/min. L'installation est placée sous une hotte puissante pour éviter toute contamination par l'aérosol de chlorure d'acide. On place sous la buse. à une distance de 10 cm, un morceau de papier filtre Whatman N°2 de 10 cm de côté pendant une durée d'une seconde de façon à ce qu'une quantité de 10 mg soit déposée sur le papier. Le papier est ensuite placé dans un four ventilé pendant 15 secondes. Le papier est ensuite testé pour son hydrophobie comparée à celle obtenue dans l'exemple 38 par imprégnation par le réactif dissout dans un solvant. On constate que les hydrophobies obtenues sont identiques.

Cette expérience indique qu'il est possible d'appliquer la microdispersion de réactif de greffage par un aérosol.

**Revendications**

1. Procédé de traitement d'un matériau solide dont la structure chimique définit des fonctions hydrophiles protogènes réactives accessibles aux gaz en vue du greffage covalent de groupements hydrophobes sur ces fonctions hydrophiles dans lequel :

   - on choisit au moins un réactif de greffage RX, où R est un groupement hydrophobe, adapté pour pouvoir être à l'état liquide à une température d'au moins 200°C sous pression atmosphérique et pour pouvoir réagir sur lesdites fonctions hydrophiles au moins sous certaines conditions réactionnelles en produisant un greffage covalent de groupements hydrophobes R sur lesdites fonctions hydrophiles avec formation d'un composé HX volatil dans les conditions réactionnelles,
   - on réalise au moins une microdispersion (5, 8) d'une composition liquide comprenant au moins un réactif de greffage RX, sur au moins une partie (4, 7, 11) du matériau solide,
   - on applique, sur ladite microdispersion (5, 8), au moins un courant gazeux (3, 15), neutre vis-à-vis de la réaction de greffage de RX sur lesdites fonctions hydrophiles, à une température inférieure à la température d'ébullition du(des) réactif(s) de greffage RX, de sorte que la réaction de greffage s'effectue par diffusion du (des) réactif(s) de greffage en milieu hétérogène sur toutes les fonctions hydrophiles accessibles aux gaz du matériau solide, et uniquement sur ces fonctions.

2. Procédé selon la revendication 1, caractérisé en ce que pour réaliser ladite microdispersion, on applique une quantité de composition liquide au contact d'au moins une première face (4, 7, 12) externe libre du matériau solide.

3. Procédé selon l'une des revendications 1 et 2, caractérisé en ce qu'on applique un courant gazeux (3, 15) sur au moins une face externe libre du matériau solide.

4. Procédé selon l'une des revendications 1 à 3, caractérisé en ce qu'on réalise au moins une microdispersion (5, 8) sur le matériau solide avant d'appliquer le courant gazeux sur le matériau solide.

**5.** Procédé selon l'une des revendications 1 à 4, caractérisé en ce qu'on applique le courant gazeux (3, 15) sur le matériau solide en même temps que l'on réalise au moins une microdispersion (5, 8).

**6.** Procédé selon l'une des revendications 1 à 5, caractérisé en ce qu'on réalise au moins une microdispersion par nébulisation dirigée vers le matériau solide.

**7.** Procédé selon l'une des revendications 2 à 6, caractérisé en ce qu'on réalise au moins une microdispersion (5, 8) par contact de ladite première face (4, 7) avec au moins un support solide préalablement chargé en une composition liquide principalement constituée d'au moins un réactif de greffage RX à l'état liquide.

**8.** Procédé selon la revendication 7, caractérisé en ce que le support solide est choisi parmi un tampon absorbant, un tampon non absorbant, un rouleau entraîné en rotation, un pinceau.

**9.** Procédé selon l'une des revendications 2 à 8, caractérisé en ce qu'on réalise au moins une microdispersion (5, 8) en mouillant au moins une partie du matériau solide avec une composition liquide formée d'une solution d'au moins un réactif de greffage RX dans un solvant neutre volatil.

**10.** Procédé selon l'une des revendications I à 9, caractérisé en ce qu'on dirige le courant gazeux (3, 15) vers au moins une face externe libre (4, 12) dudit matériau solide avec une composante de vitesse perpendiculairement à cette face qui est non nulle, le courant gazeux (3, 15) étant appliqué sur cette face externe (4, 12) avec une vitesse d'incidence non nulle.

**11.** Procédé selon l'une des revendications 1 à 10, caractérisé en ce qu'on place ledit matériau solide dans un espace de traitement adapté, selon les caractéristiques du courant gazeux, pour que le composé HX formé soit extrait dudit matériau solide au fur et à mesure de sa formation.

**12.** Procédé selon l'une des revendications 1 à 11, caractérisé en ce qu'on place ledit matériau solide dans un espace de traitement adapté, selon les caractéristiques du courant gazeux, pour que la quantité de flux gazeux (6) issue dudit matériau solide pouvant être à nouveau ramenée sur ledit matériau solide par le courant gazeux (3, 15) soit nulle ou négligeable.

**13.** Procédé selon l'une des revendications 1 à 12, caractérisé en ce qu'on applique le courant gazeux (3, 15) et on évacue le flux gazeux (6) en circuit ouvert.

**14.** Procédé selon l'une des revendications 1 à 13, caractérisé en ce que le courant gazeux (3, 15) est exempt de réactif de greffage RX.

**15.** Procédé selon l'une des revendications 1 à 14, caractérisé en ce que le courant gazeux (3, 15) est exempt de composé HX.

**16.** Procédé selon l'une des revendications 1 à 15, caractérisé en ce que le courant gazeux (3, 15) est aprotique.

**17.** Procédé selon l'une des revendications 1 à 16, caractérisé en ce que le courant gazeux (3, 15) est de l'air.

**18.** Procédé selon l'une des revendications 1 à 17, caractérisé en ce que X est un halogène, notamment le chlore.

**19.** Procédé selon l'une des revendications 1 à 18, caractérisé en ce que R est un groupement hydrophobe organique contenant plus de 6 carbones et moins de 50 carbones.

**20.** Procédé selon l'une des revendications 1 à 19, caractérisé en ce que lorsque ledit matériau solide comprend des fonctions hydrophiles protogènes réactives appartenant au groupe formé de -OH, -NH2, et -SH, on choisit au moins un réactif de greffage RX pour lequel R est un acyle.

**21.** Procédé selon l'une des revendications 1 à 20, caractérisé en ce qu'on choisit au moins un réactif de greffage RX parmi le chlorure de l'acide béhénique et le chlorure de l'acide stéarique.

**22.** Procédé selon l'une des revendications 1 à 21, caractérisé en ce que lorsque ledit matériau solide comprend des fonctions hydrophiles réactives appartenant au groupe formé de —SiOH, -OH, -NH2, et -SH, on choisit au moins un réactif de greffage RX pour lequel R est R1-Si où R1 est un groupement hydrophobe organique.

23. Procédé selon l'une des revendications 1 à 22 de traitement d'une fibre ou d'une structure fibreuse naturelle ou artificielle comprenant des macromolécules polymériques, caractérisé en ce qu'on effectue au préalable un traitement de réticulation des macromolécules polymériques.

24. Procédé selon l'une des revendications 1 à 23, caractérisé en ce qu'on enduit ensuite au moins une face externe du matériau solide d'une composition hydrophobe.

25. Matériau comprenant des groupements hydrophobes R greffés de façon covalente susceptible d'être obtenu par un procédé selon l'une des revendications 1 à 24.

26. Matériau selon la revendication 25, caractérisé en ce que les groupements hydrophobes comprennent entre 8 et 50 carbones.

27. Matériau selon l'une des revendications 25 et 26, caractérisé en ce qu'il est formé d'une structure minérale -notamment de verre-.

28. Application du matériau selon l'une des revendications 25 à 27 pour l'obtention d'un pare-brise de véhicule, au moins partiellement formé d'un verre comprenant au moins une face destinée à être au contact des intempéries qui est rendue hydrophobe par greffage covalent des groupements hydrophobes ayant entre 8 et 50 carbones.

29. Application d'un procédé selon l'une des revendications 1 à 24 pour l'obtention d'une composition solide sous forme divisée absorbant les hydrocarbures, et de densité inférieure à celle de l'eau.

30. Application d'un procédé selon l'une des revendications 1 à 24 pour le traitement de papier.

31. Application d'un procédé selon l'une des revendications 1 à 24 pour le traitement d'au moins une partie d'une face de pare-brise de véhicule destinée à être placée au contact des intempéries.

**Claims**

1. A method for treating a solid material of which the chemical structure defines reactive protogenic hydrophillic functions accessible to gases, with a view to the covalent grafting of hydrophobic groups onto these hydrophillic functions, wherein:

   - at least one grafting reagent RX is chosen, where R is a hydrophobic group, adapted so that it can be in the liquid state at a temperature of at least 200°C under atmospheric pressure and so that it can react on the said hydrophillic functions at least under certain reaction conditions by producing covalent grafting of the hydrophobic groups R onto the said hydrophillic functions with formation of a volatile compound HX under the reaction conditions,

   - at least one microdispersion (5, 8) of a liquid composition comprising at least one grafting reagent RX, is produced on at least one part (4, 7, 11) of the solid material,

   - at least one gas stream (3, 15), which is neutral to the grafting reaction of RX on the said hydrophillic functions, is applied to the said microdispersion (5, 8) at a temperature below the boiling point of the grafting reagent(s) RX, so that the grafting reaction is carried out by diffusion of the grafting reagent(s) in a heterogeneous medium onto all the hydrophillic functions of the solid material accessible to gases, and only onto these functions.

2. The method as claimed in claim 1 wherein, in order to produce the said microdispersion, a quantity of liquid composition is applied in contact with at least one first free outer face (4, 7, 12) of the solid material.

3. The method as claimed in one of claims 1 and 2, wherein a gas stream (3, 15) is applied to at least one free outer face of the solid material.

4. The method as claimed in one of claims 1 to 3, wherein at least one microdispersion (5, 8) is produced on the solid material before applying the gas stream to the solid material.

5. The method as claimed in one of claims 1 to 4, wherein the gas stream (3,15) is applied to the solid material at the same time as at least one microdispersion (5,8) is produced.

6. The method as claimed in one of claims 1 to 5, wherein at least one microdispersion is produced by spraying directed towards the solid material.

7. The method as claimed in one of claims 2 to 6, wherein at least one microdispersion (5,8) is produced by contacting the-said first face (4,7) with at least one solid support previously loaded with a liquid composition mainly consisting of at least one grafting reagent RX in the liquid state.

8. The method as claimed in claim 7, wherein the solid support is chosen from an absorbent pad, a non-absorbent pad, a roller driven in rotation and a brush.

9. The method as claimed in one of claims 2 to 8, wherein at least one microdispersion (5,8) is produced by wetting at least one part of the solid material with a liquid composition formed of a solution of at least one grafting reagent RX in a volatile neutral solvent.

10. The method as claimed in one of claims 1 to-9, wherein the gas stream (3,15) is directed towards at least one free outer face (4,12) of the said solid material with a component of the velocity perpendicular to this face which is not zero, the gas stream (3,15) being applied to this outer face (4,12), with an incident velocity which is not zero.

11. The method as claimed in one of claims 1 to 10, wherein the said solid material is placed in a treatment space adapted, according to the characteristics of the gas stream, so that the compound HX formed is extracted from the said solid material as it is formed.

12. The method as claimed in one of claims 1 to 11, wherein the said solid material is placed in a treatment space adapted, according to the characteristics of the gas stream, so that the quantity of the gas flow (6) coming from the said solid material which can be once again returned to the said solid material by the gas stream (3,15) is zero or negligible.

13. The method as claimed in one of claims 1 to 12, wherein the gas stream (3,15) is applied and the gas flow (6) is extracted in open circuit.

14. The method as claimed in one of claims 1 to 13, wherein the gas stream (3,15) is free from the grafting reagent RX.

15. The method as claimed in one of claims 1 to 14, wherein the gas stream (3,15) is free from the compound HX.

16. The method as claimed in one of claims 1 to 15, wherein the gas stream (3,15) is aprotic.

17. The method as claimed in one of claims 1 to 16, wherein the gas stream (3,15) is air.

18. The method as claimed in one of claims 1 to 17, wherein X is a halogen, in particular chlorine.

19. The method as claimed in one of claims 1 to 18, wherein R is an organic hydrophobic group containing more than 6 carbons and less than 50 carbons.

20. The method as claimed in one of claims 1 to 19, wherein, when the said solid material includes reactive protogenic hydrophillic functions belonging to the group formed of -OH, $-NH_2$, and -SH, at least one grafting reagent RX is chosen for which R is an acyl.

21. The method as claimed in one of claims 1 to 20, wherein at least one grafting reagent RX is chosen from behenic acid chloride and stearic acid chloride.

22. The method as claimed in one of claims 1 to 21, wherein, when the said material includes reactive hydrophillic functions belonging to the group formed of -SiOH, -OH, $NH_2$ and -SH, at least one grafting reagent RX is chosen for which R is R1-Si where R1 is an organic hydrophobic group.

23. The method as claimed in one of claims 1 to 22 for treating a natural or artificial fibre or fibrous structure comprising polymeric macromolecules, wherein a crosslinking treatment of the polymeric macromolecules is first of all carried out.

24. The method as claimed in one of claims 1 to 23, wherein at least one outer face of the solid material is then coated with a hydrophobic composition.

25. A material including hydrophobic groups R grafted in a covalent manner which can be obtained by a method as claimed in one of claims 1 to 24.

26. The material as claimed in claim 25, wherein the hydrophobic groups include between 8 and 50 carbons.

27. The material as claimed in one of claims 25 and 26, wherein it is formed of an inorganic structure, in particular glass.

28. An application for the material as claimed in one of claims 25 to 27 for obtaining a vehicle windshield, wherein it is at least partially formed of a glass having at least one face designed to be in contact with the weather which is made hydrophobic by covalent grafting of hydrophobic groups having between 8 and 50 carbons.

29. An application for a process as claimed in one of claims 1 to 24, for obtaining a solid composition in a divided form absorbing hydrocarbons, and having a density of less than that of water.

30. An application of a method as claimed in one of claims 1 to 24 for treating paper.

31. An application for a process as claimed in one of claims 1 to 24 for treating at least part of a face of a vehicle windshield designed to be placed in contact with the weather.


**Patentansprüche**

1. Verfahren zur Behandlung eines festen Materials, dessen chemische Struktur hydrophile, protonenliefernde Reaktionseigenschaften definiert, die für Gase zugänglich sind, um in diese hydrophilen Eigenschaften kovalent hydrophobe Gruppen zu implantieren, umfassend die folgenden Schritte:

   - Wählen von wenigstens einem RX-Implantationsmittel, wobei R eine hydrophobe Gruppe ist, die bei einer Temperatur von wenigstens 200°C unter atmosphärischem Druck in den flüssigen Zustand übergehen kann und die auf die genannten hydrophilen Eigenschaften wenigstens unter bestimmten Reaktionsbedingungen reagiert, um eine kovalente Implantation von hydrophoben R-Gruppen in die genannten hydrophilen Funktionen unter Bildung einer HX-Verbindung zu bewirken, die unter diesen Reaktionsbedingungen flüchtig ist,
   - Erzielen von wenigstens einer Mikrodispersion (5, 8) einer flüssigen Zusammensetzung, die wenigstens ein RX-Implantationsmittel auf wenigstens einem Teil (4, 7, 11) des festen Materials umfasst,
   - Aufbringen von wenigstens einem Gasstrom (3, 15) auf die genannte Mikrodispersion (5, 8), die gegenüber der RX-Implantationsreaktion auf die genannten hydrophilen Funktionen bei einer Temperatur unter der Siedetemperatur des/der RX-Implantationsmittel(s) neutral ist, so dass die Implantationsreaktion durch Diffusion des/der Implantationsmittel(s) in einem heterogenen Medium auf allen hydrophilen Eigenschaften erfolgt, die für die Gase des festen Materials zugänglich sind, und nur auf diesen Eigenschaften.

2. Verfahren nach Anspruch 1, dadurch gekennzeichnet, dass zum Erzielen der genannten Mikrodispersion eine Menge der flüssigen Zusammensetzung in Kontakt mit wenigstens einer ersten Außenfläche (4, 7, 12) aufgebracht wird, die frei von dem festen Material ist.

3. Verfahren nach einem der Ansprüche 1 und 2, dadurch gekennzeichnet, dass ein Gasstrom (3, 15) auf wenigstens eine freie Außenfläche des festen Materials aufgebracht wird.

4. Verfahren nach einem der Ansprüche 1 bis 3, dadurch gekennzeichnet, dass wenigstens eine Mikrodispersion (5, 8) vor dem Aufbringen des Gasstroms auf dem festen Material erzielt wird.

5. Verfahren nach einem der Ansprüche 1 bis 4, dadurch gekennzeichnet, dass der Gasstrom (3, 15) auf das feste Material zur selben Zeit aufgebracht wird, wie die wenigstens eine Mikrodispersion (5, 8) erzielt wird.

**6.** Verfahren nach einem der Ansprüche 1 bis 5, dadurch gekennzeichnet, dass wenigstens eine Mikrodispersion durch auf das feste Material gerichtete Zerstäubung erzielt wird.

**7.** Verfahren nach einem der Ansprüche 2 bis 6, dadurch gekennzeichnet, dass wenigstens eine Mikrodispersion (5, 8) durch den Kontakt der genannten ersten Fläche (4, 7) mit wenigstens einem festen Substrat erzielt wird, das zuvor in einer flüssigen Zusammensetzung getränkt wurde, die vornehmlich aus wenigstens einem RX-Implantationsmittel im flüssigen Zustand besteht.

**8.** Verfahren nach Anspruch 7, dadurch gekennzeichnet, dass das feste Substrat ausgewählt wird, aus einem absorptionsfähigen Tampon, einem nicht absorptionsfähigem Tampon, einer in Drehung versetzten Rolle und einem Pinsel.

**9.** Verfahren nach einem der Ansprüche 2 bis 8, dadurch gekennzeichnet, dass wenigstens eine Mikrodispersion (5, 8) ,durch Befeuchten von wenigstens einem Teil des festen Materials mit einer flüssigen Zusammensetzung erfolgt, die aus einer Lösung aus wenigstens einem RX-Implantationsmittel in einem neutralen und flüchtigen Lösungsmittel besteht.

**10.** Verfahren nach einem der Ansprüche 1 bis 9, dadurch gekennzeichnet, dass der Gasstrom (3, 15) auf wenigstens eine freie Außenfläche (4, 12) des genannten festen Materials mit einer lotrecht zu dieser Fläche verlaufenden Geschwindigkeitskomponente von ungleich null gerichtet wird, wobei der Gasstrom (3, 15) auf diese Außenfläche (4, 12) mit einer Einfallsgeschwindigkeit von ungleich null aufgebracht wird.

**11.** Verfahren nach einem der Ansprüche 1 bis 10, dadurch gekennzeichnet, dass das genannte feste Material in einem Behandlungsraum platziert wird, der gemäß den Eigenschaften des Gasstroms so gestaltet ist, dass die gebildete HX-Verbindung in dem Maße extrahiert wird, in dem sie gebildet wird.

**12.** Verfahren nach einem der Ansprüche 1 bis 11, dadurch gekennzeichnet, dass das genannte feste Material in einem Behandlungsraum platziert wird, der gemäß den Eigenschaften des Gasstroms so gestaltet ist, dass die Gasflussmenge (6), die aus dem genannten festen Material austritt und durch den Gasstrom (3, 15) erneut auf das genannte feste Material zurückgeführt werden kann, null oder vernachlässigbar ist.

**13.** Verfahren nach einem der Ansprüche 1 bis 12, dadurch gekennzeichnet, dass das Aufbringen des Gasstroms (3, 15) und das Evakuieren des Gasflusses (6) im offenen Kreislauf erfolgen.

**14.** Verfahren nach einem der Ansprüche 1 bis 13, dadurch gekennzeichnet, dass der Gasstrom (3, 15) kein RX-Implantationsmittel enthält.

**15.** Verfahren nach einem der Ansprüche 1 bis 14, dadurch gekennzeichnet, dass der Gasstrom (3, 15) keine HX-Verbindung enthält.

**16.** Verfahren nach einem der Ansprüche 1 bis 15, dadurch gekennzeichnet, dass der Gasstrom (3, 15) aprotisch ist.

**17.** Verfahren nach einem der Ansprüche 1 bis 16, dadurch gekennzeichnet, dass der Gasstrom (3, 15) Luft ist.

**18.** Verfahren nach einem der Ansprüche 1 bis 17, dadurch gekennzeichnet, dass X ein Halogen, insbesondere Chlor ist.

**19.** Verfahren nach einem der Ansprüche 1 bis 18, dadurch gekennzeichnet, dass R eine organische hydrophobe Gruppe ist, die mehr als 6 Kohlenstoffatome und weniger als 50 Kohlenstoffatome enthält.

**20.** Verfahren nach einem der Ansprüche 1 bis 19, dadurch gekennzeichnet, dass, während das genannte feste Material hydrophile, protonenliefernde Reaktionseigenschaften hat, die zu der Gruppe gehören, die aus -OH, -NH2 und -SH gebildet ist, wenigstens ein RX-Implantationsmittel gewählt wird, für das R ein Acyl ist.

**21.** Verfahren nach einem der Ansprüche 1 bis 20, dadurch gekennzeichnet, dass wenigstens ein RX-Implantationsmittel aus Behensäurechlorid und Stearinsäurechlorid ausgewählt wird.

**22.** Verfahren nach einem der Ansprüche 1 bis 21, dadurch gekennzeichnet, dass, wenn das genannte feste Material hydrophile Reaktionseigenschaften hat, die zu der Gruppe gehören, die aus -SiOH, -OH, -NH2 und -SH besteht, wenigstens ein RX-Implantationsmittel ausgewählt wird, für das R R1-Si oder R1 eine organische hydrophobe Gruppe ist.

23. Verfahren nach einem der Ansprüche 1 bis 22 zur Behandlung einer Faser oder einer natürlichen oder künstlichen Faserstruktur, die polymere Makromoleküle umfasst, dadurch gekennzeichnet, dass vorher eine Retikulationsbehandlung von polymeren Makromolekülen durchgeführt wird.

24. Verfahren nach einem der Ansprüche 1 bis 23, dadurch gekennzeichnet, dass danach wenigstens eine Außenfläche des festen Materials mit einer hydrophoben Zusammensetzung beschichtet wird.

25. Material, umfassend kovalente hydrophobe R-Implantationsgruppen, die mit einem Verfahren gemäß einem der Ansprüche 1 bis 24 erhalten werden können.

26. Material nach Anspruch 25, dadurch gekennzeichnet, dass die hydrophoben Gruppen 8 bis 50 Kohlenstoffatome aufweisen.

27. Material nach einem der Ansprüche 25 und 26, dadurch gekennzeichnet, dass es aus einer Mineralstruktur, insbesondere aus Glas gebildet ist.

28. Verwendung des Materials nach einem der Ansprüche 25 bis 27 zur Erzielung einer Fahrzeugwindschutzscheibe, die wenigstens teilweise aus einem Glas besteht, das wenigstens eine Fläche aufweist, die mit Witterungseinflüssen in Kontakt kommt und die durch eine kovalente Implantation von hydrophoben Gruppen mit 8 bis 50 Kohlenstoffatomen hydrophob gemacht wird.

29. Anwendung eines Verfahrens nach einem der Ansprüche 1 bis 24 zur Herstellung einer festen Zusammensetzung in unterteilter Form, die Kohlenwasserstoffe absorbiert und eine Dichte aufweist, die geringer ist als die von Wasser.

30. Anwendung eines Verfahrens nach einem der Ansprüche 1 bis 24 für die Behandlung von Papier.

31. Anwendung eines Verfahrens nach einem der Ansprüche 1 bis 24 für die Behandlung von wenigstens einem Teil einer Fläche einer Fahrzeugwindschutzscheibe, die mit Witterungsbedingungen in Kontakt kommt.

FİG. 1

FİG. 2

FİG. 3

FIG. 4